(19)

Europäisches
Patentamt

European
Patent Office

Office européen
des brevets

(11) **EP 2 823 938 A1**

(12) **EUROPEAN PATENT APPLICATION**
published in accordance with Art. 153(4) EPC

(43) Date of publication:
**14.01.2015 Bulletin 2015/03**

(21) Application number: **13758382.9**

(22) Date of filing: **11.03.2013**

(51) Int Cl.:
***B25F 5/00*** *(2006.01)*

(86) International application number:
**PCT/CN2013/000253**

(87) International publication number:
**WO 2013/131412 (12.09.2013 Gazette 2013/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **09.03.2012 CN 201210061585
06.06.2012 CN 201210184651
06.06.2012 CN 201210184638**

(71) Applicant: **Positec Power Tools (Suzhou) Co., Ltd
Suzhou, Jiangsu 215123 (CN)**

(72) Inventors:
• **HUO, Lixiang**
  **Suzhou**
  **Jiangsu 215123 (CN)**
• **PANG, Xiaoli**
  **Suzhou**
  **Jiangsu 215123 (CN)**

• **ZHANG, Shisong**
  **Suzhou**
  **Jiangsu 215123 (CN)**
• **SUN, Yimin**
  **Suzhou**
  **Jiangsu 215123 (CN)**
• **ZHONG, Hongfeng**
  **Suzhou**
  **Jiangsu 215123 (CN)**
• **XU, Jingtao**
  **Suzhou**
  **Jiangsu 215123 (CN)**

(74) Representative: **Stuttard, Garry Philip
Urquhart-Dykes & Lord LLP
Tower North Central
Merrion Way
Leeds LS2 8PA (GB)**

(54) **OSCILLATING POWER TOOL**

(57)   An oscillating power tool having variable oscillating angles comprises a housing comprising a head housing and a body housing connected to the head housing, a motor received in the body housing and comprised a driving shaft configured to rotate about a axis of the drive shaft, an eccentric unit disposed on the driving shaft and configured to rotate eccentrically about the axis of the driving shaft, an output shaft received in the head housing and configured to oscillate about the axis of the output shaft, the output shaft is capable of installing and driving a working head, a fork connected to the output shaft and configured to turn the rotating motion of the driving shaft to the oscillating motion of the output shaft by coordinating with the eccentric unit, the heading housing is operable to move relative to the body housing, the fork is configured to move relative to the eccentric unit and coordinate with the eccentric unit in different positions for different oscillating angles of the output shaft.

Fig. 3

**Description**

**TECHNICAL FIELD**

The present invention relates to a power tool, in particular to a hand-held oscillating power tool.

**BACKGROUND OF THE INVENTION**

Oscillating power tools are common hand-clamped oscillating power tools in this field. Their working principle is that the output shaft oscillates around its own axis. Therefore, many different operation functions such as sawing, cutting, grinding and scraping can be realized to meet different demands by installing different heads on the free end of the output shaft such as the straight saw blade, circular saw blade, triangular sanding disc and shovel-shaped scraper.

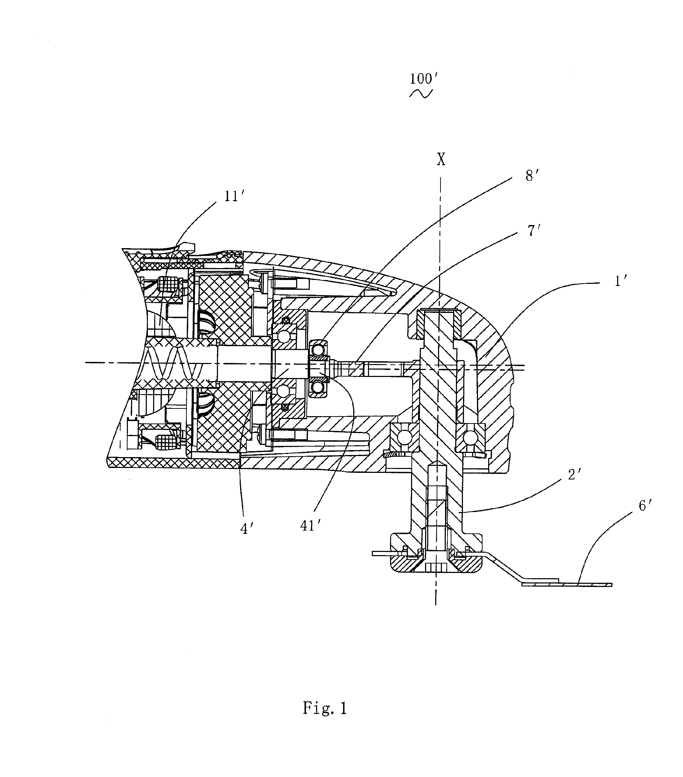

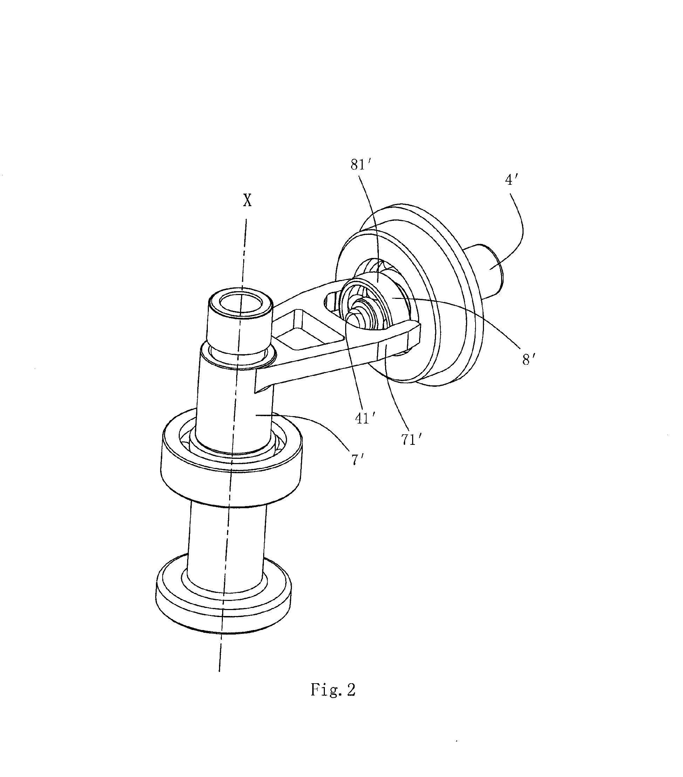

Specifically, refer to Figure 1 and Figure 2. An oscillating power tool 100' includes a case 1', an output shaft 2' extending out of the case 1', a motor 11' disposed in the case 1' and a main shaft 4'. One end of the main shaft 4' is connected with a connecting shaft 41' with its axis deviated, and the connecting shaft 41' is equipped with a bearing 8' with a spherical outer surface 81'. A fork 7' is disposed between the main shaft 4' and the output shaft 2'. One end of the fork 7' is pivotally connected to the output shaft 2', and the other end is formed with a pair of arm portions 71' located on two sides of the bearing 8'. The output shaft 2' is approximately vertical to the axis of the main shaft 4', and the outer surface of the bearing 8' closely touches the inner surfaces of the arm portions 71' of the fork 7'. When rotating around its axis, the main shaft 4' drives the output shaft 2' to rotate and oscillate around its own axis in a certain oscillating angle through mating between the bearing 8' and the fork 7', thus driving the too head 6' installed on the output shaft 2' to oscillate.

When the above oscillating power tool 100' is working, the bearing 8' is driven by the connecting shaft 41' to rotate around the axis of the main shaft 4', and the area of the fork 7' that contacts the bearing 8' is always unchanged, so the output shaft 2' of the oscillating power tool 100' can only oscillate in a fixed oscillation angle range. In use, users usually hope that the oscillating power tool 100' can output different oscillating angles to meet more functional demands. For example, when the oscillating power tool 100' equipped with a straight saw blade is used to slot wood materials of different hardness, the output shaft 2' usually outputs a common small oscillating angle if the wood materials have low hardness; chips are difficult to discharge due to the small oscillating angle if the wood materials have high hardness, and the straight blade is easy to get stuck, so the output shaft 2' needs to output a relatively large oscillating angle. Clearly, the oscillating power tool 100's fails to meet such demand.

In order to solve the above technical problem, a China Patent, publication No. CN100575004C, discloses an oscillating power tool capable of adjusting the oscillating output angle. This oscillating power tool includes an eccentric element installed on the motor shaft, an output shaft vertical to the motor shaft and a fork disposed between the motor shaft and the output shaft. Through mating between the eccentric element and the fork, the rotary motion of the motor shaft is converted into the oscillatory motion of the output shaft. Wherein, the eccentric element cannot radially rotate relative to the motor shaft, but the motor shaft can move axially. Further setting a toggle connected with the eccentric element and a movable key located on the case can drive the eccentric element to move axially, change the relative distance between the eccentric element and the output shaft and finally adjust the oscillating angle of the output shaft.

However, in the above structure, it is required to set the toggle and axially move the eccentric element together with the toggle upward, so enough space is needed, and then the entire machine becomes bigger and brings inconvenience to operation.

Thus, it is necessary to provide an improved oscillating power tool to solve the above problems.

**SUMMARY OF THE INVENTION**

One of the object of the invention is providing an oscillating power tool having variable oscillating angle, simple structure and not need to increase the size.

To achieve the object, the solution of the invention is as below: An oscillating power tool comprises a motor, a driving shaft rotatably driven by the motor, an eccentric unit connected at the distal end of the driving shaft, the axis of the eccentric unit is eccentric to the axis of the driving shaft, an output shaft configured to oscillate about the axis itself and mount and drive the working head, and a oscillating mechanism disposed between the driving shaft and the output shaft, the oscillating mechanism is configured to convert the rotation motion of the driving shaft into the oscillating motion of the output shaft, the oscillating mechanism comprises a transmission unit mounted on the eccentric unit and a fork mounted on the output shaft and coordinated with the transmission unit, the center line of the transmission unit is eccentric to the axis of the eccentric unit, the transmission unit is configured to rotatably move between at least two coordinating positions around the eccentric unit for at least two different eccentric distance between the center line of the transmission unit and the axis of the driving shaft.

In a preferred embodiment, the transmission unit is in the first position coordinated with the eccentric unit when the motor rotates clockwise and in the second position coordinated with the eccentric unit when the motor rotates counterclockwise.

In a preferred embodiment, a first stopper is disposed on the transmission unit and the oscillating power tool comprises a second stopper fixed to the eccentric unit and coordinated with the first stopper.

In a preferred embodiment, each of the first stopper and the second stopper has at least one block, the block has two block surfaces back to back and extending along the axis direction of the eccentric unit.

In a preferred embodiment, each of the first stopper and the second stopper has two blocks.

In a preferred embodiment, the two block surface of the block on one of the first stopper and the second stopper radialy retract to form a fan-shaped section along the direction of facing the axis of the eccentric unit.

In a preferred embodiment, the block surface is parallel to the axis of the eccentric unit.

In a preferred embodiment, the block surface is angular to the axis of the eccentric unit.

In a preferred embodiment, the first stopper and the second stopper are configured to self-locked in the direction of the axis of the eccentric unit.

In a preferred embodiment, the friction coefficient between the block surfaces of the first stopper and the second stopper, the center of the transmission unit and the center of the eccentric unit form a first line in the plane perpendicular to the axis of the eccentric unit, the center of the transmission unit and the center of the driving shaft form a second line in the plane and the first line and the second line form an included angle of $\theta$, the included angle $\theta$ is less than or equal to arctan $\mu$.

In a preferred embodiment, the transmission unit is eccentric bearing having an outer ring and an inner ring, the inner ring rotatably sleeved on the eccentric unit and is eccentric to the axis of eccentric unit, the first stopper longitudinally extends from the end face of the inner ring.

In a preferred embodiment, the maximum radial size of the first stopper is less than the minimum radial size of the second stopper.

In a preferred embodiment, a counterweight is mounted on the driving shaft, the gravity of the counterweight and the gravity of the eccentric unit are on the opposite sides of the axis of the driving shaft, the second stopper longitudinally extends from the end face of the counterweight.

The advantage of the invention is: The eccentric unit with a certain eccentric distance is mounted on the driving shaft and a transmission unit with a certain eccentric to eccentric unit is mounted on the eccentric unit, the transmission unit is configured to rotatably move between the two coordinating position relative to the eccentric unit. So the transmission unit has at least two different eccentric distances to the eccentric unit and the output shaft oscillates in two different oscillating angles by the fork to satisfy the working demand in different environment.

Another object of the invention is providing an oscillating power tool configured to oscillate in at least two oscillating angles.

To achieve the object, the solution of the invention is as below: An oscillating power tool comprises a housing having a head housing and a body housing connected to the head housing, a motor contained in the body housing and having a rotatable driving shaft, an eccentric unit disposed on the driving shaft and being eccentrically rotatable about the axis of the driving shaft, an output shaft contained in the head housing and being capable of oscillating about an axis of the output shaft for installing and driving a working head, and a fork connected to the output shaft and being configured to transform the rotating motion of the driving shaft to the oscillating motion of the output shaft by cooperation with the eccentric unit, the head housing is operable to move relative to the body housing and to drive the fork moving relative to the eccentric unit and coordinating with the eccentric unit in different positions, thus the output shaft oscillate at different oscillating angles.

In a preferred embodiment, a guiding mechanism is disposed between the head housing and the body housing to slide the head housing relative to the body housing.

In a preferred embodiment, one of the head housing and the body housing comprises at least one clip and the other of the head housing and the body housing comprises at least two slots for coordinating with the clip respectively to fix the head housing and the body housing in at least two coordinating positions.

In a preferred embodiment, a binding mechanism is disposed at the outside of the head housing or that of the body housing, the binding mechanism is configured to prevent the looseness of the head housing and the body housing in the coordinating positions.

In a preferred embodiment, a locking mechanism is disposed between the head housing and the body housing, the locking mechanism is configured to lock the head housing and the body housing at any one of the sliding position of the head housing and the body housing.

In a preferred embodiment, the locking mechanism comprises a cam lever which is rotatable to loose or lock the head housing and the body housing.

In a preferred embodiment, an visible scale is disposed on one of the head housing and the body housing and configured to illustrate the oscillating angle of the output shaft when the head housing slides relative to the body housing.

In a preferred embodiment, a limiting mechanism is disposed between the head housing and the body housing and configured to limit the rotation of the head housing relative to the body housing.

In a preferred embodiment, the limiting mechanism comprises a guiding groove being disposed on one of the head housing and the body housing and a guiding rail disposed on the other one of the head housing and the body housing, the guiding rail is slidable in the guiding groove without rotation.

In a preferred embodiment, the head housing is not rotatable relative to the body housing, the oscillating power tool comprises an adjusting cover being rotatable about the axis of the output shaft, an operating element being disposed on the head housing and being spirally meshed with the adjusting cover, the adjusting cover is rotatable to move about the axis of the output shaft relative to the body housing by coordinating with the operating element.

In a preferred embodiment, an elastic unit is disposed between the head housing and the body housing and configured to bias the head housing in the direction far away from the body housing.

In a preferred embodiment, the eccentric unit comprises a first bearing and a second bearing optionally coordinated with the fork.

In a preferred embodiment, the head housing is configured to move relative to the body housing in a step or stepless fashion.

In a preferred embodiment, the head housing is configured to move relative to the body housing along the direction of the axis of the driving shaft.

The advantage of the invention is: The output shaft is fixed relative to the head housing, the fork is mounted on the output shaft and configured to move relative to the eccentric unit and coordinate with the eccentric unit in different positions under the operation of moving the head housing relative to the body housing. The output shaft oscillates in different oscillating angles to satisfy the working demand in different environment.

Another object of the invention is providing an oscillating power tool configured to oscillate in at least two oscillating angles and work stably in the chosen oscillating angle.

To achieve the object, the solution of the invention is as below: An oscillating power tool comprises a housing having a head housing and a body housing connected to the head housing, a motor contained in the body housing and having a rotatable driving shaft, an eccentric unit disposed on the driving shaft and being eccentrically rotatable about an axis of the driving shaft, an output shaft contained in the head housing and being capable of oscillating about an axis of the output shaft for installing and driving a working head, and a fork connected to the output shaft and being configured to transform the rotating motion of the driving shaft to the oscillating motion of the output shaft by cooperation with the eccentric unit, the fork is operable to move relative to the eccentric unit and coordinate with the eccentric unit in at least two different coordinating positions, thus the output shaft oscillates at different oscillating angles, the oscillating power tool further comprising a fixing mechanism for fixing the fork and the eccentric unit in any one of the coordinating positions.

In a preferred embodiment, the fixing mechanism comprises a clip and a slot coordinated with the clip.

In a preferred embodiment, the output shaft is fixedly disposed in the head housing, the head housing is operable to move relative to the body housing, the clip is disposed on one of the head housing and the body housing, and the other one of the head housing and the body housing comprises at least two slots respectively coordinate with the clip.

In a preferred embodiment, a binding mechanism is disposed at the outside of the head housing or that of the body housing, the binding mechanism is configured to prevent the looseness of the head housing and the body housing in the coordinating positions.

In a preferred embodiment, the locking mechanism comprises a cam lever, the cam lever is rotatable to move or fix the fork and the eccentric unit.

In a preferred embodiment, the output shaft is fixedly disposed in the head housing which is operable to move relative to the body housing, the cam lever is rotated to fix the head housing relative to the body housing when the head housing slides to any position relative to the body housing.

In a preferred embodiment, the head housing is not rotatable relative to the body housing, the fixing mechanism comprises an adjusting cover and an operating element which is spirally meshed with the adjusting cover, the adjusting cover is rotated to fix the fork and the eccentric unit by coordinating of the eccentric unit with the fork in different positions through the operating element.

In a preferred embodiment, the output shaft is fixedly disposed in the head housing which is operable to move relative to the body housing, the operating element is disposed on the head housing or the body housing.

In a preferred embodiment, an elastic unit is disposed between the head housing and the body housing and is configured to bias the head housing towards a direction far away from the body housing.

In a preferred embodiment, the oscillating power tool comprises an adjusting mechanism for adjusting the fork to move relative to the eccentric unit, the fixing mechanism has a locking condition which the adjusting mechanism is fixed and a releasing condition which the adjusting mechanism is removable.

In a preferred embodiment, the eccentric unit comprises a first bearing and a second bearing optionally coordinated with the fork.

In a preferred embodiment, the head housing is configured to move relative to the body housing in a step or stepless fashion.

In a preferred embodiment, the head housing is configured to move relative to the body housing along the direction of the axis of the driving shaft.

The advantage of the invention is: The fork and the eccentric unit are operable to move relatively and coordinate with each other at least two positions, the output shaft oscillates at least two different oscillating angles to satisfy working demand in different environment. Meanwhile, a fixing mechanism is disposed to assure the output shaft stably in a chosen oscillating angle.

**BRIEF DESCRIPTION OF THE DRAWINGS**

Figure 1 is a sectional view of an oscillating power tool.

Figure 2 is a partially structural view of the oscillating power tool.

Figure 3 is a perspective view of an oscillating power tool in the first embodiment of the present invention.

Figure 4 is a perspective exploded view of the oscillating power tool as shown in Figure 3.

Figure 5 is a perspective view of a counterweight of the oscillating power tool as shown in Figure 4.

Figure 6 is a perspective view of a transmission unit of the oscillating power tool as shown in Figure 4.

Figure 7 is a perspective view showing that a part of elements of the oscillating power tool as shown in Figure 3 are located at a first mating position when the motor rotates clockwise and the output shaft outputs a first oscillating angle.

Figure 8 is a sectional view showing that a part of elements of the oscillating power tool as shown in Figure 7 are transversely sectioned along the transmission unit.

Figure 9 is a vertical view of the oscillating power tool as shown in Figure 3 at the first mating position.

Figure 10 is a perspective view showing that a part of elements of the oscillating power tool as shown in Figure 3 are located at a second mating position when the motor rotates anticlockwise and the output shaft outputs a second oscillating angle.

Figure 11 is a sectional view showing that a part of elements of the oscillating power tool as shown in Figure 10 are transversely sectioned along the transmission unit.

Figure 12 is a vertical view of the oscillating power tool as shown in Figure 3 at the second mating position.

Figure 13 is a perspective view of the counterweight and a second stopper in the second embodiment of the present invention.

Figure 14 is a perspective view of an inner ring of the transmission unit in the second embodiment of the present invention.

Figure 15 is a schematic view of the assembly of elements as shown in Figure 13 and Figure 14 at the first mating position.

Figure 16 is a perspective view of the oscillating power tool in the third embodiment of the present invention, where the head housing and the case are located at the first position.

Figure 17 is a perspective exploded view of the oscillating power tool as shown in Figure 16.

Figure 18 is a schematic view of assembly of the free end and the clip of the case in the oscillating power tool as shown in Figure 17.

Figure 19 is a sectional view of the oscillating power tool as shown in Figure 16 in the first status.

Figure 20 is a perspective view of the oscillating power tool as shown in Figure 16 in a second status, where the head housing and the case are located at the second mating position.

Figure 21 is a sectional view of the oscillating power tool as shown in Figure 20.

Figure 22 is a perspective view of the oscillating power tool, as shown in Figure 16 that is equipped with a locking mechanism.

Figure 23 is a perspective view of the locking mechanism as shown in Figure 22.

Figure 24 is a perspective view of the oscillating power tool in the fourth embodiment of the present invention, where the head housing and the case are located at the first position.

Figure 25 is a perspective view of the oscillating power tool as shown in Figure 24 in a second status, where the head housing and the case are located at the second mating position.

Figure 26 is a perspective exploded view of the oscillating power tool as shown in Figure 24.

Figure 27 is a sectional view showing the closed locking mechanism of the oscillating power tool as shown in Figure 24.

Figure 28 is a sectional view showing the open locking mechanism of the oscillating power tool as shown in Figure 24.

Figure 29 is a sectional view of the oscillating power tool as shown in Figure 24.

Figure 30 is a sectional view of the oscillating power tool as shown in Figure 25.

Figure 31 is a perspective view of the oscillating power tool in the fifth embodiment of the present invention, where the head housing and the case are located at the first position.

Figure 32 is a perspective exploded view of the oscillating power tool as shown in Figure 31.

Figure 33 is a partially sectional view of the oscillating power tool as shown in Figure 31.

Figure 34 is a perspective view of the oscillating power tool as shown in Figure 31 in a second status, where the head housing and the case are located at the second mating position.

Figure 35 is a sectional view of the oscillating power tool as shown in Figure 31.

Figure 36 is a sectional view of the oscillating power tool as shown in Figure 34.

## DETAILED DESCRIPTION OF THE INVENTION

The present invention is described in further detail with reference to the attached drawings and the specific embodiments.

Embodiment 1

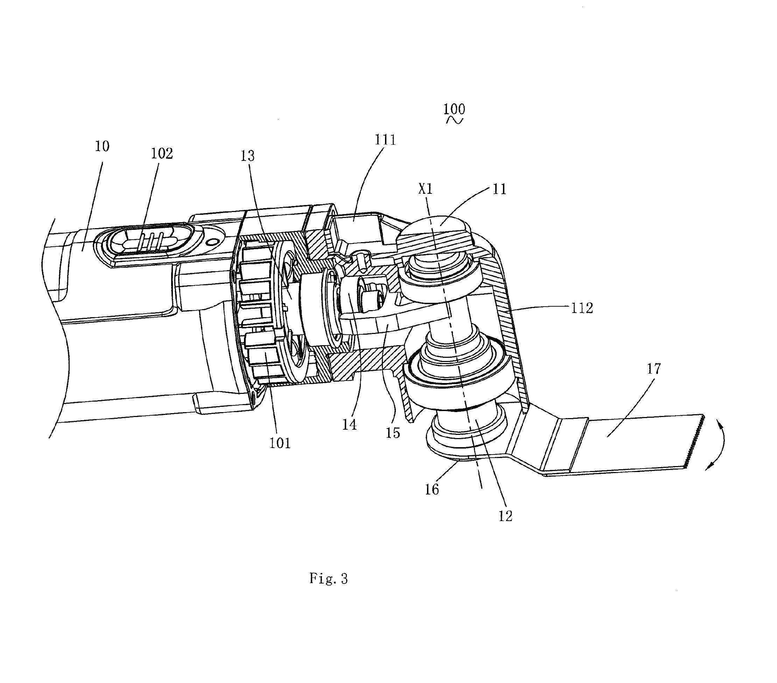

Refer to Figure 3. A power tool, specifically an oscillating power tool 100, includes a body housing 10 extending lengthwise, a head housing 11 connected to the front end (as shown in Figure 1, the right side is defined as the front end) of the body housing 10 and an output shaft 12 extending out of the head housing 11. A motor 101 is provided in the body housing 10. The body housing 10 is also provided with a switch 102 to control the startup or shutdown of the motor 101. The motor 101 has a driving shaft 13 extending out transversely. The driving shaft 13 is driven by the motor 101 to rotate. The head housing 11 includes a horizontal portion 111 which is connected with the boy housing 10 and is disposed along the horizontal direction as shown in Figure 1 and a vertical portion 112 which approximately vertically extends downwards along the tail end of the horizontal portion 111. The output shaft 12 is disposed in the vertical direction, and has one end installed in the head housing 11, the other end downward extending out of the vertical portion 112 of the head housing 11. The output shaft is configured to rotate in a reciprocating way around its own longitudinal axis X1 in a direction indicated by the double arrow in Figure 1.

In addition, an oscillating mechanism is located in the head housing 11 and between the driving shaft 13 and the output shaft 12. The oscillating mechanism includes a transmission unit 14 and a fork 15 coordinated with the transmission unit 14. Through the oscillating mechanism, the rotary motion of the driving shaft 13 can be converted into the oscillatory motion of the output shaft 12. When rotated by the driving shaft 13, the transmission unit 14 drives the output shaft 12 to oscillate about its own axis X1 through coordinating with the fork 15. The oscillating angle is approximately in the range of 0.5-7 degrees, and the oscillating frequency can be set as 5,000-30,000rpm. The free end of the output shaft 12 can be equipped with a working head 17 by a fixer 16. In this embedment, the working head 17 is a kind of straight saw blade. The working head 17 is able to be driven by the output shaft 12 to oscillate along the direction indicated by the dual arrow in Figure 1.

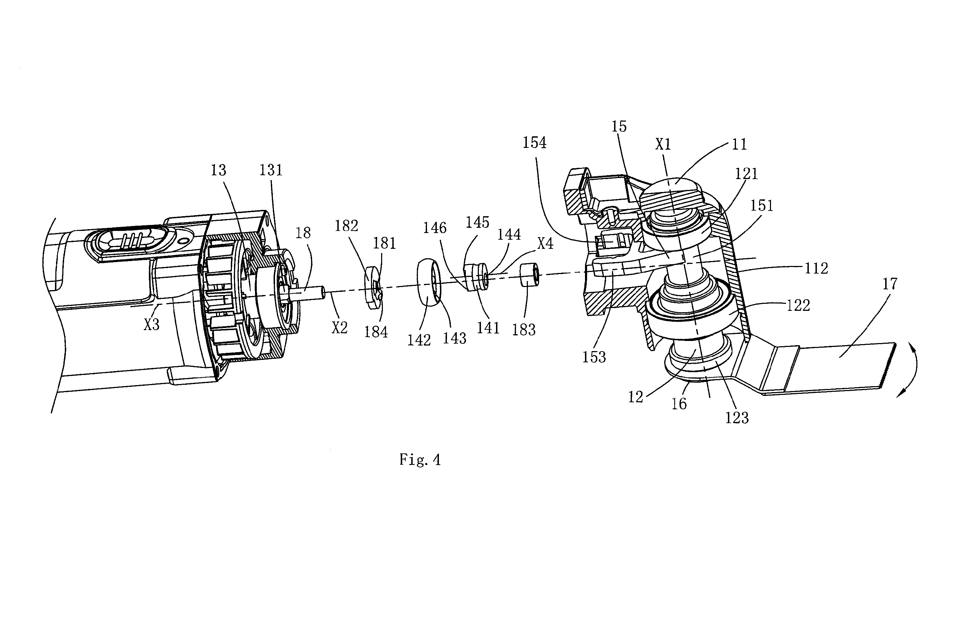

As shown in Figure 4, the direction of the straight line where the axis X1 of the output shaft 12 exists is defined as the longitudinal direction, and the direction vertical to the axis X1 is defined as the transverse direction; the bottom of the paper is downward, and the top of the paper is upward. The following descriptions all employ such definitions. The tail end of the driving shaft 13 is connected with an eccentric shaft 18. The axis X2 of the eccentric shaft 18 is eccentrically arranged relative to the axis X3 of the driving shaft 13. The axis X2 and the axis X3 are spaced at a fixed eccentric distance. The transmission unit 14 is sleeved on the eccentric shaft 18. The central line X4 of the transmission unit 14 is eccentrically arranged relative to the axis X2 of the eccentric shaft 18. The central line X4 is respectively spaced from X2 and X3 at corresponding eccentric distances. The transmission unit 14 is configured to rotate around the axis X2 of the eccentric shaft 18 and move between two mating positions. The eccentric shaft 18 is eccentrically arranged relative to the driving shaft 13, and the transmission unit 14 is eccentrically arranged relative to the eccentric shaft 18, so when the transmission unit 14 rotates around the eccentric shaft 18, the relative eccentric distance between the transmission unit 14 and the driving shaft 13 changes. In this embodiment, the clockwise rotation of the motor 101 is defined as the forward rotation, and the anticlockwise rotation is defined as the backward rotation. When the motor 101 rotates forward, the transmission unit 14 is located at the first mating position; when the motor 101 rotates backward, the transmission unit 14 moves from the first mating position to the second mating position and therefore have two different eccentric distances relative to the driving shaft 13. The fork 15 is driven by the transmission 14 to oscillate around axis X1 of the output shaft 12, so the oscillating angle (namely oscillating amplitude) of the fork 15 is affected by the eccentric distance between the transmission unit 14 and the driving shaft 13 and is in direction proportion to the value of the eccentric distance. When the transmission unit 14 changes between the two different eccentric distances relative to the driving shaft 13, the fork 15 can drive the output shaft 12 to output two different oscillating angles.

In this embodiment, the output shaft 12 is longitudinally arranged, with the upper and lower ends respectively fixed in the head housing 11 through bearings 121 and 122. The tail end of the output shaft 12 that extends out of the head housing 11 is formed with a flange 123 with an increasing diameter. The working head 17 is installed on the flange 123 through the fixer 16.

Further refer to Figure 4. The fork 15 is crosswise arranged. The right end is a sleeve tube 151 sleeved on the output shaft 12, and the left end is a plate-like fork body 152 that extends from the sleeve tube 151 to the driving shaft 13. The free ends of the fork body 152 are two parallel arm portions 153. The upper parts of the two arm portions 153 are respectively formed with meshing walls 154 which are vertically arranged and are parallel to each other. The transmission unit 14 is covered between the two arm portions 153 of the fork 15. The two sides of the transmission unit 14 are respectively seamlessly engaged with the meshing walls 154 of the fork 15.

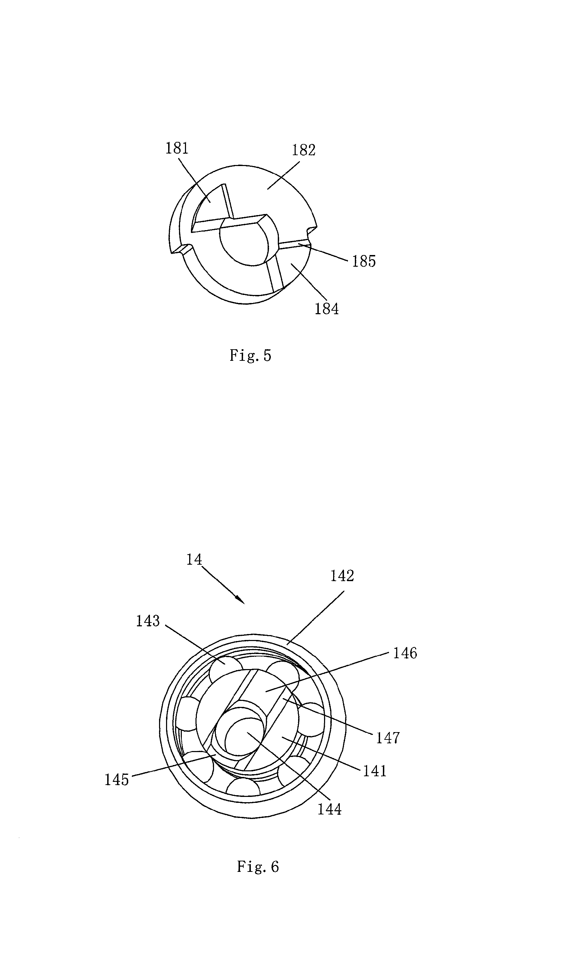

Refer to Figure 4 and Figure 5 together. In this embodiment, the transmission unit 14 is specifically set as an eccentric bearing, including an inner ring 141, an outer ring 142 and a ball 143 arranged between the inner ring 141 and the outer ring 142. The middle portion of the inner ring 141 is formed with a round bore 144. The bore 144 is eccentrically arranged relative to the central line X4 of the transmission unit 14 such that the transmission unit 14 has a certain eccentric distance after being rotationally arranged at the eccentric shaft 18 through the bore 144.

When the motor 101 rotates forward and backward, the transmission unit 14 is driven to switch relative to the eccentric shaft 18 between two mating positions and has two different eccentric distances relative to the driving shaft 13. In this embodiment, the transmission unit 14 is provided with a first stopper 145, and a second stopper 181 that cannot rotate relative to the eccentric shaft 18. Through mating between the first stopper 145 and the second stopper 181, the transmission unit 14 can steadily rotate along with the driving shaft 13 at the two mating positions.

Refer to Figures 4-6, the tail end, close to the eccentric shaft 18, of the driving shaft 13 is provided with a flat square portion 131. A ring-shaped counterweight 182 is un-rotationally installed at the flat square portion and located on the left side of the transmission unit 14. The gravity centre of the counterweight and that of the eccentric shaft 18 are located on two sides of the axis X3 of the driving shaft 13. In addition, the tail end of the eccentric shaft 18 is also equipped with a position sleeve 183 that axially limits the transmission unit 14. Wherein, the first stopper 145 is arranged on the end face of the inner ring 141 that faces the driving shaft 13, and the second stopper 181 is arranged on the end face of the counterweight 182 that faces the transmission unit 14. Wherein, the maximum radial size of the first stopper 145 is smaller than the minimum radial size of the outer ring 142 to prevent radial interference between the first stopper 145 and the outer ring 142 when the transmission unit 14 rotates.

In this embodiment, the first stopper 145 and the second stopper 181 respectively are first blocks 146 and second blocks 184. Two first blocks 146 are arranged oppositely, protrude and extend from the left end face of the inner ring 141 of the transmission unit 14 towards the driving shaft 13. Two second blocks 184 are arranged oppositely, axially protrude and extend from the right end face of the counterweight 182 towards the transmission unit 14. It is very easy to understand that the quantity of the first block 146 and that of the second block 184 may be one or more, all playing a limiting role. In addition, each block 146 has a first left block surface 147 and a first right block surface 148 which are reversely arranged in the axial direction; and each second block 184 has a second left block surface 185 and a second right bock surface 186 which are reversely arranged in the axial direction.

When the transmission unit 14 is located at the first mating position, a pair of the first left block surfaces 147 of the transmission unit 14 are respectively engaged with a pair of the second left block surfaces 185 of the second stopper 181; when the transmission unit 14 is located at the second mating position, a pair of the first right block surfaces 148 of the transmission unit 14 are respectively engaged with a pair of second left block surfaces 186 of the second stopper 181.

Therefore, the first stopper 145 and the second stopper 181 have larger mating surfaces and can be mated more steadily. In this embodiment, the two block surfaces 185 of each second block 184 of the second stopper 181 gradually shrink towards the axis of the eccentric shaft 18 and form a sector, meaning that the corresponding two straight lines of the two second block surfaces 185 form an included angle in the radial cross section of the second block 184. Correspondingly, the two first block surfaces 147 of each first block 146 of the first stopper 181 are symmetrically arranged, meaning that the corresponding straight lines of the two first block surfaces 147 are parallel in the radial cross section of the first block 146. The first blocks 146 are distributed in the circumference and rotate around the eccentric shaft 18, so the second blocks 184 are sector shaped to realize face-to-face contact instead of point-to-face contact when the first block surfaces 147 and the second block surfaces 185 are mated. The mating is steadier, and then the transmission unit 14 does not jump during transmission. Clearly, those skilled in this field can understand that the first blocks 146 and the second blocks 184 may also be arranged oppositely, meaning that the two first block surfaces 147 of each first block 146 form a sector when the two second block surfaces 185 of each second block 184 are arranged symmetrically.

During rotation, the transmission unit 14 is mated with the fork 15 to drive the output shaft 12 to oscillate. The two sides of the transmission unit 14 contact the two arm portions 153 of the fork 15 and axially thrust by the meshing walls of the arm portions 153 along the direction of the eccentric shaft 18, so the transmission unit 14 is in the trend of axial reciprocation during rotation. Therefore, the transmission unit 14 is limited to reciprocate axially and steadily rotates at any mating position. In this embodiment, the first block surfaces 147 and the second block surfaces 184 of the first stopper 145 and the second stopper 181 are all arranged in a way of forming an included angle with the axis X2 of the eccentric shaft 18, namely forming a certain slope along the axis X2 of the eccentric shaft 18. In this way, the first block surfaces 147 and the second block surfaces 184 do not slip relative to each other, but rotate steadily when stressed.

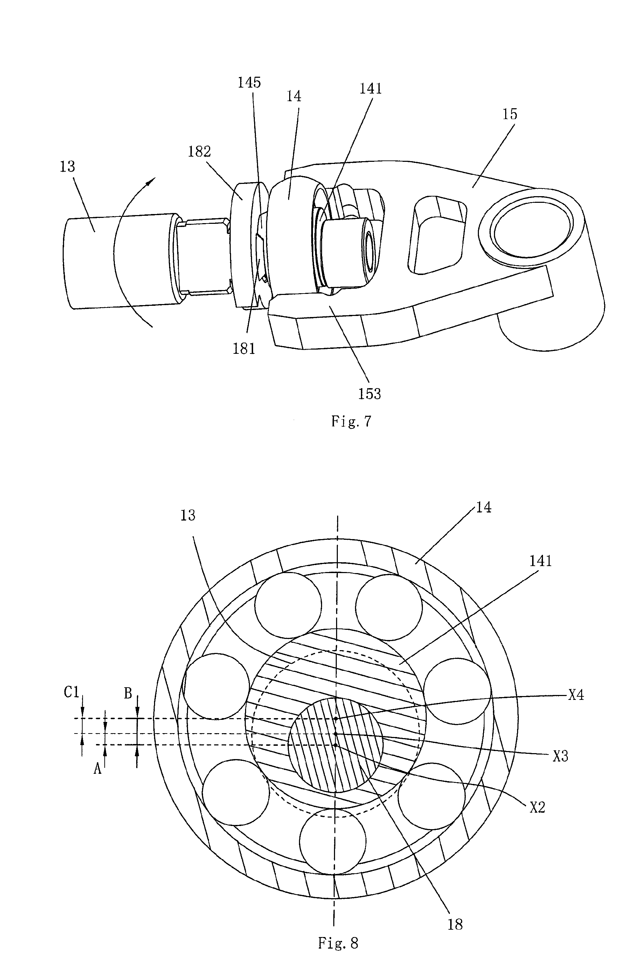

The mating situation of the transmission unit 14 at the first mating position is described in detail below with reference to Figures 7-9. As shown in Figure 7, when the motor 101 rotates clockwise, the driving shaft 13 drives the eccentric shaft 18 to rotate around its axis X3, and the eccentric shaft 18 drives the transmission unit 14 to eccentrically rotate around the axis X3 at the same time. The transmission unit 14 engaged with the fork 15 eccentrically rotates around the axis X3 of the driving shaft 13 while the inner ring 141 of the transmission unit 14 rotates relative to the axis X2 of the eccentric shaft 18 by the arm portion 153. After the transmission unit 14 rotates a certain angle relative to the axis X2, the first stopper 144 thereof starts to mate with the second stopper 181 on the counterweight 182 and limits the transmission unit 14 at the first mating position. At this moment, a pair of first left block surfaces 147 of the transmission unit 14 is respectively meshed with a pair of second left block surfaces 185 of the second stopper 181.

As shown in Figure 8, the axes X3 and X2 of the driving shaft 13 and the eccentric shaft 18 and the central line X4 of the transmission unit 14 are located in the same vertical plane when at the first mating position. The eccentric distance A between the axis X2 of the eccentric shaft 18 and the axis X3 of the driving shaft 13 is fixed and unchanged. The eccentric distance B between the central line X4 of the transmission unit 14 and the axis X2 of the eccentric shaft 18 is also fixed and unchanged. But, the eccentric distance C between the central line 4 of the transmission unit 14 and the axis X3 of the driving shaft 13 is changeable. In such circumstances, the eccentric distance C is the minimum value C1=B-A at the first mating position.

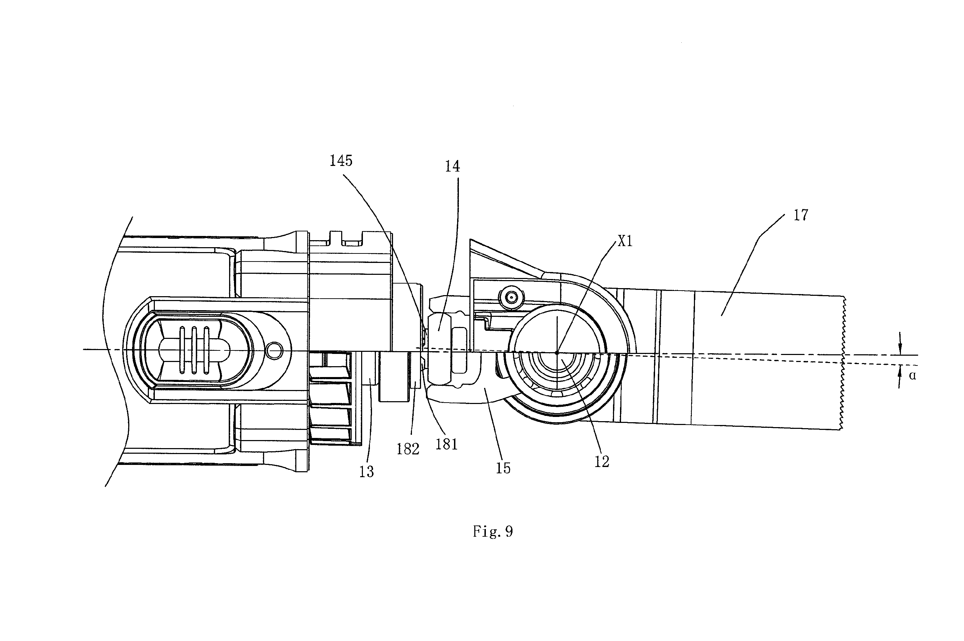

Refer to Figure 9. When the transmission unit 14 is located at the first mating position, the eccentric distance C between the transmission unit 14 and the driving shaft 13 is the minimum value C1. Correspondingly, after the transmission unit 14 is mated with the fork 15, the fork 15 drives the output shaft 12 to oscillate, and the output shaft 12 finally drives the working head 17 to oscillate. In such circumstances, the oscillating angle of the output shaft 12 is the first oscillating angle $\alpha$, namely the minimum oscillating angle that the output shaft 12 can output.

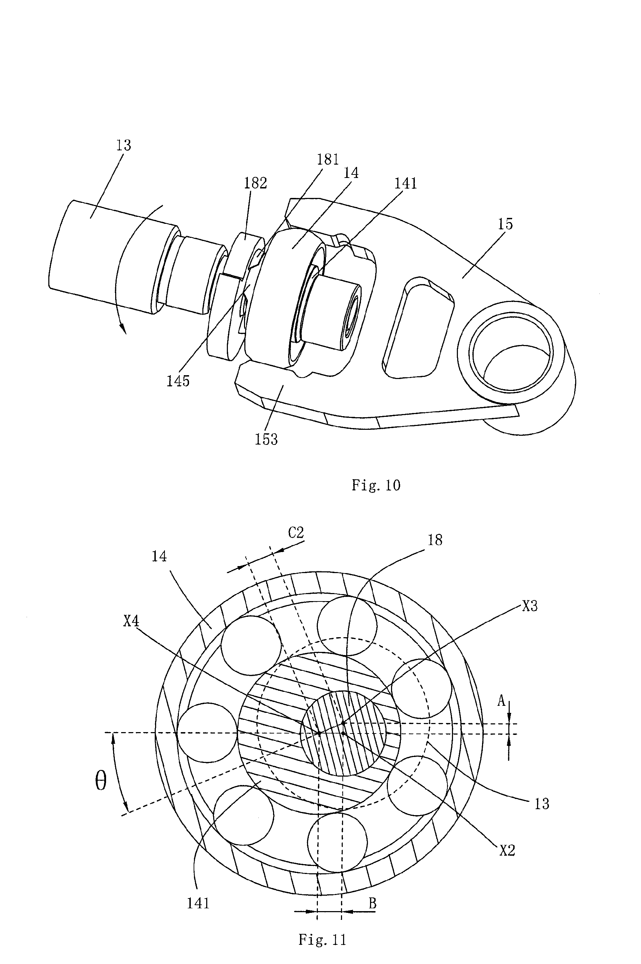

The mating situation of the transmission unit 14 at the second mating position is described in detail below with reference to Figures 10-12. As shown in Figure 10, when the motor 101 rotates anticlockwise, the driving shaft 13 drives the eccentric shaft 18 to rotate around its axis X3, and the eccentric shaft 18 drives the transmission unit 14 to eccentrically rotate around the axis X3 at the same time. The transmission unit 14 engaged with the fork 15 eccentrically rotates around the axis X3 of the driving shaft 13 while the inner ring 141 of the transmission unit 14 rotates relative to the axis X2 of the eccentric shaft 18 by the arm portions 153. After the transmission unit 14 leaves the first mating position and clockwise rotates on its own axis and relative to the axis X2 to a certain angle, the first stopper 145 is mated with the second stopper 181 on the counterweight 182 are mated at the second position and finally limits the transmission unit 14 at the second mating position. At this moment, a pair of second left block surfaces 148 of the transmission unit 14 is respectively meshed with a pair of second left block surfaces 186 of the second stopper 181.

As show in Figure 11, at the second mating position, the axes X3 and X2 of the driving shaft 13 and the eccentric shaft 18 and the central line X4 of the transmission unit 14 form an approximate right triangle at three corresponding points in a longitudinal plane. The first straight edge of the triangle is the eccentric distance A between the axis X2 of the eccentric shaft 18 and the axis X3 of the driving shaft 13; the second straight edge is the eccentric distance B of the central line X4 of the transmission unit 14 and the axis X2 of the eccentric shaft 18; and the bevel edge is the variable eccentric distance C between the central line X4 of the transmission unit 14 and the axis X3 of the driving shaft 13. At this moment, at the second mating position, the eccentric distance C turns from the minimum value C1 into a larger value C2, and the value of C2 is approximate to $\sqrt{A2 + B2}$.

Further refer to Figure 11. In the plane vertical to the axis X2 of the eccentric shaft 18, the centre of the transmission unit 14 and the centre of the eccentric shaft 18 form a first connecting line; the centre of the transmission unit 14 and the center of the driving shaft 13 form a second connecting line; and those two connecting lines form an included angle of $\theta$. In this embodiment, the friction coefficient between the first block surfaces 147 of the first stopper 145 of the transmission unit 14 and the second block surfaces 185 of the second stopper 181 is $\mu$. To ensure that the first stopper 145 and the second stopper 181 are steadily mated and do not jump in the radial direction, the included angle $\theta$ is less than or equal to arctan $\mu$ such that the first block surfaces 147 and the second block surfaces 185 can avoid relative slip after mating. In addition, the included angle $\theta$ can drive the mated first block surfaces 147 and second block surfaces 185 to axially form self-locking along the axis X2 of the eccentric shaft 18, fully ensuring that the transmission unit 14 can steadily rotate at the first mating position or the second mating position and do not loosen or jump when driven by the driving shaft 13, thus ensuring the working stability of the entire machine.

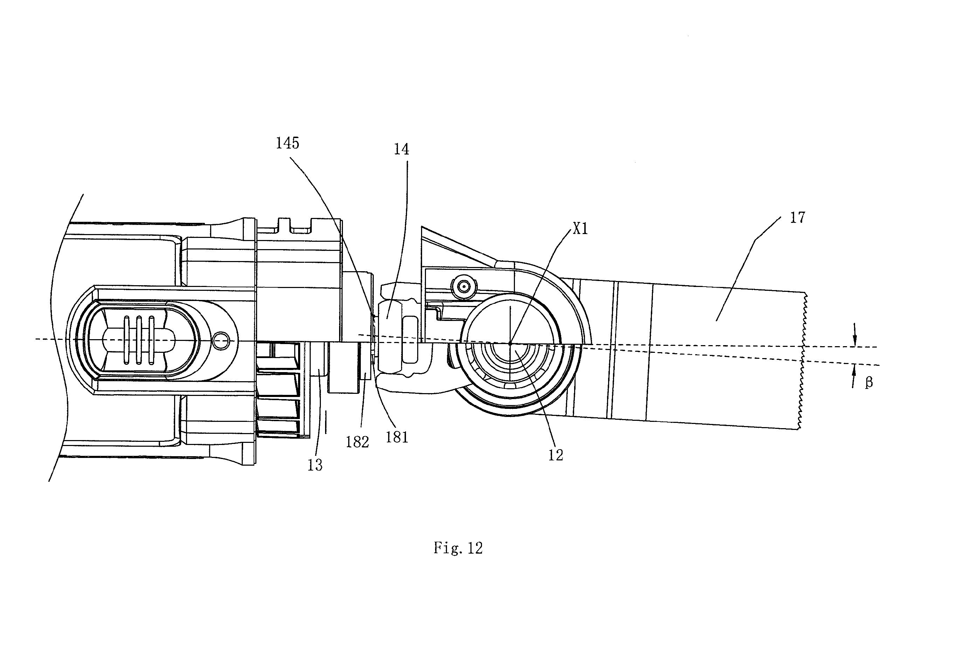

Refer to Figure 12. When the transmission unit 14 is located at the second mating position, the eccentric distance C between the transmission unit 14 and the driving shaft 13 is a relatively large value C2. Correspondingly, after the transmission unit 14 is mated with the fork 15, the fork 15 drives the output shaft 12 to oscillate, and the output shaft 12 finally drives the working head 17 to oscillate. In such circumstances, the oscillating angle of the output shaft 12 is the second oscillating angle $\beta$. Clearly, the second oscillating angle $\beta$ is greater than the first oscillating angle $\alpha$, so the working head 17 can work at a higher frequency.

Embodiment 2

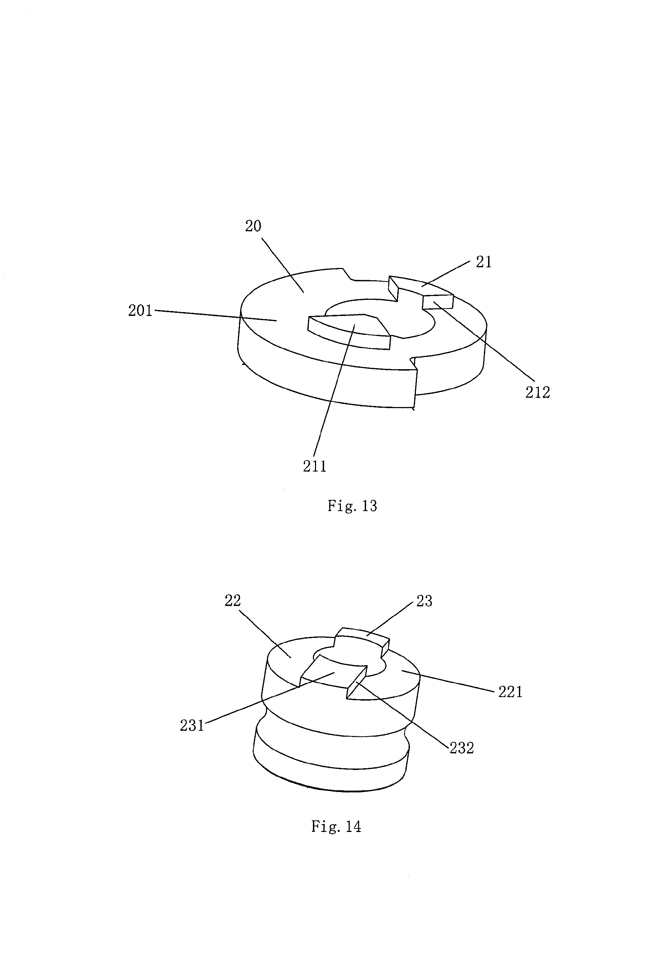

In the first embodiment, the first block surfaces on the first stopper of the transmission unit and the second block surfaces of the second stopper on the counterweight are arranged in a way of forming an included angle relative to the axis of the eccentric shaft. The first blocks of the transmission unit and the second blocks of the second stoppers are arranged in a way of having a certain taper. The first block surfaces and the second block surfaces to form a certain slope along the axis of the eccentric shaft. Clearly, the first block surfaces and the second block surfaces can also be set as planes parallel to the axis of the eccentric shaft, also realizing adjustment on the relative eccentric distance between the transmission unit and the driving shaft. The second embodiment of the present invention is simply described with reference to Figures 13-15.

This embodiment is different from the oscillating power tool 100 in the first embodiment in the second stopper 21 on the counterweight 20 and the first stopper 23 on the inner ring 22 of the transmission unit. As shown in Figure 13, the counterweight 20 is an annular plate having a second upper surface 201 vertical to the axis of the eccentric shaft (identical with the first embodiment). The second stopper 21 includes two sector-shaped second blocks 211 that extend vertically from the second upper surface 201 of the counterweight 20. Each second block 211 has two reverse second block surfaces 212. Wherein, the second block surfaces 212 are vertical to the upper surface of the counterweight 20 and parallel to the axis of the eccentric shaft.

As shown in Figure 14, the inner ring 22 of the transmission unit has a first upper surface 221 vertical to the axis of the eccentric shaft. The first stopper 23 includes two first blocks 231 that extend axially from the first upper surface 221. Each first block 231 has second block surfaces 232 in parallel. Wherein, the first block surfaces 232 are vertical to the first upper surface 221 and parallel to the axis of the eccentric shaft.

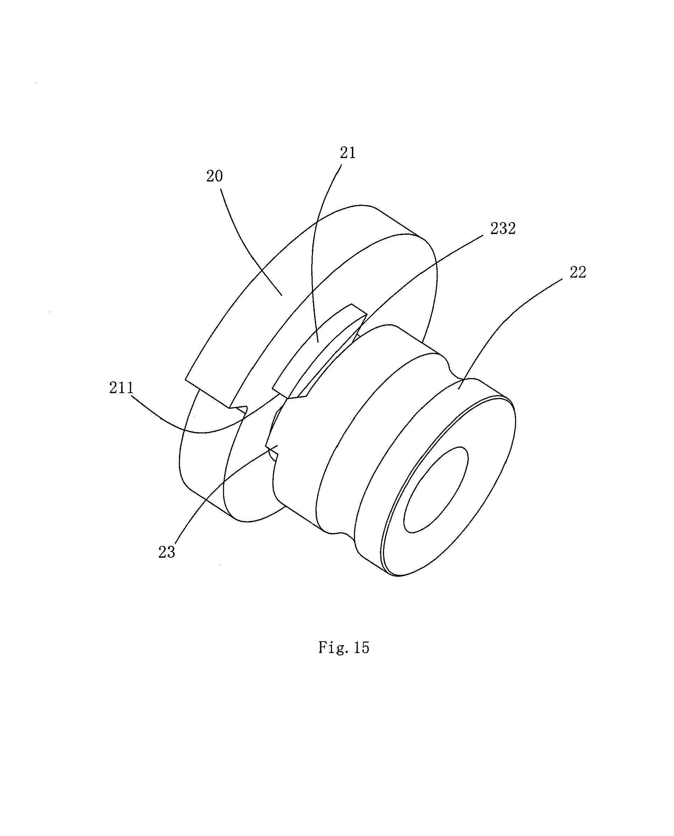

As shown in Figure 15, when the first stopper 23 is mated with the second stopper 21 at two different positions, the first block surfaces 232 can well fit with the second block surfaces 222, so the transmission unit has two different eccentric distances relative to the driving shaft and the output shaft can output two different oscillating angles.

Through the description of the above embodiment, it can be understood that, the oscillating power tool of the present invention has the eccentric shaft connected to the driving shaft and the transmission unit installed on the eccentric shaft, and the transmission is rotationally eccentric relative to the eccentric shaft, so the relative eccentric distance between the transmission unit and the driving shaft can be adjusted when the transmission unit rotates relative to the eccentric shaft, and finally the oscillating angle transmitted to the output shaft can be changed through the fork. In addition, a first eccentric element is arranged on the transmission unit, a second eccentric element mated with the first eccentric element is arranged on the counterweight; the first eccentric element and the second eccentric element are respectively two opposite first blocks and two opposite second blocks; through mating between the first blocks and the second blocks, the transmission unit can rotationally move relative to the eccentric shaft between the two mating positions when the motor rotates forward and backward, so the transmission unit has two different eccentric distances relative to the driving shaft, and finally the output shaft outputs two different oscillating angles.

Clearly, the second eccentric element of the oscillating power tool of the present invention can also be arranged with other elements, except the counterweight, as long as it cannot rotate relative to the driving shaft. The quantity of the first block and that of the second block may be also set as 1 or three or above, capable of realizing limiting at the two different positions.

In addition, those skilled in this field can easily understand that the transmission unit can have over two mating positions relative to the eccentric shaft in a step or stepless adjustment way, so that the relative eccentric distances between the transmission unit and the driving shaft is adjusted in a step or step-less way, and the oscillating angle of the output shaft is adjusted in a step or step-less way. In this way, the case can be provided with a toggle connected with the transmission unit. The transmission unit can be driven to rotate relative to the eccentric shaft to a certain position and be fixed relative to the driving shaft through operating the toggle. The toggle may be a step or step-less adjustable transmission unit, so the output shaft can be adjusted to the expected oscillating angle in a step or step-less way, and the working head outputs different working frequencies to meet demands at different working sites.

Embodiment 3:

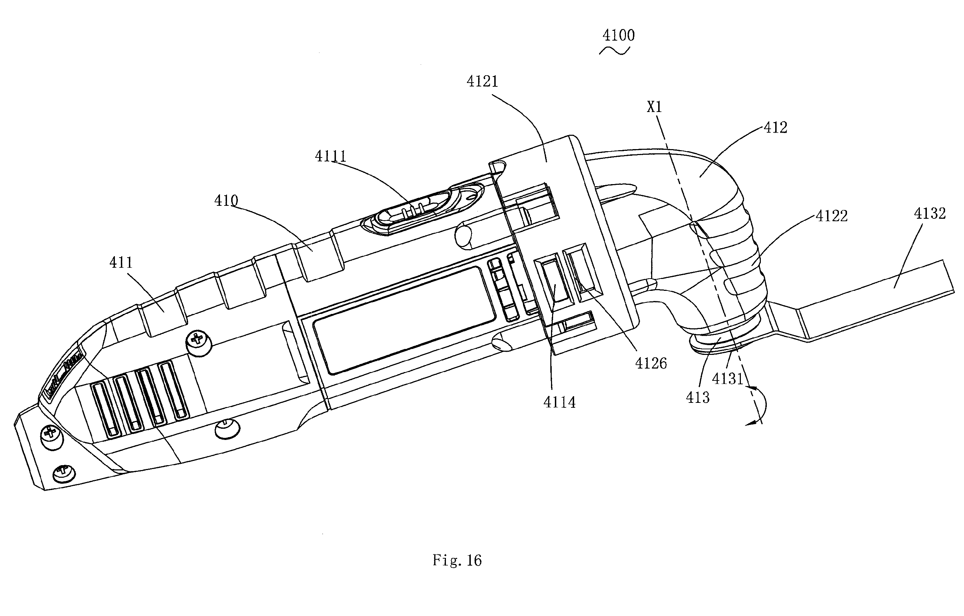

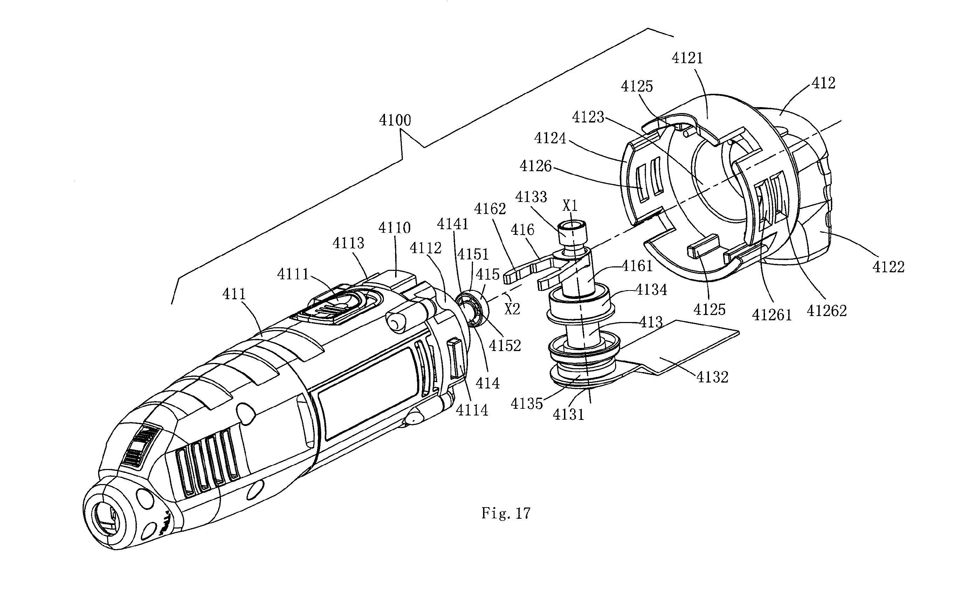

Refer to Figure 16 and Figure 17. An oscillating power tool 4100 has a housing 410. The housing 410 includes a body housing 411 extending in a longitudinal way, a head housing 412 connected to the front end of the body housing 411 (the right side in Figure 1 is defined as the front end) and an output shaft 413 extending out of the head housing 412. Wherein, the body housing 411 is internally provided with a motor 414, and the motor 414 extends transversely to form the driving shaft 4141 which rotates. The body housing 411 is also externally equipped with a switch 4111 to control the start-up and shut-off of the motor 414. The head housing 412 includes a horizontal portion 4121 which is connected to the body housing 411 and arranged transversely and a vertical portion 4122 which approximately vertically extends downward from the tail end of the horizontal portion 4121. The output shaft 413 is vertically arranged, with one end installed in the head housing 412 and the other end downward extending out of the vertical portion 4122 of the head housing 411. The output shaft can oscillate around its own longitudinal axis X1. The oscillation direction is shown by the double-headed arrow in Figure 1.

In addition, the head housing 410 is internally provided with an oscillating mechanism located between the driving shaft 414 and the output shaft 413. The oscillating mechanism includes an eccentric element 415 and a fork 416 coordinated with the eccentric element 414. Through the oscillating mechanism, the rotary motion of the driving shaft 414 can be converted into the oscillatory motion of the output shaft 413. When driven by the driving shaft 414, the rotating of the eccentric element 415 drives the oscillation of the output shaft 413 about its own axis X1 by coordinating with the fork 416. The oscillating angle is approximately in the range of 0.5-7 degrees, and the oscillating frequency is in the range of 5,000-30,000rpm. The free end of the output shaft 413 is able to be equipped with a working head 4132 through a fixer 4131. In this embedment, the working head 4132 is a kind of straight saw blade. The working head 4132 driven by the output shaft 413 oscillates along the direction indicated by the dual arrow in Figure 1.

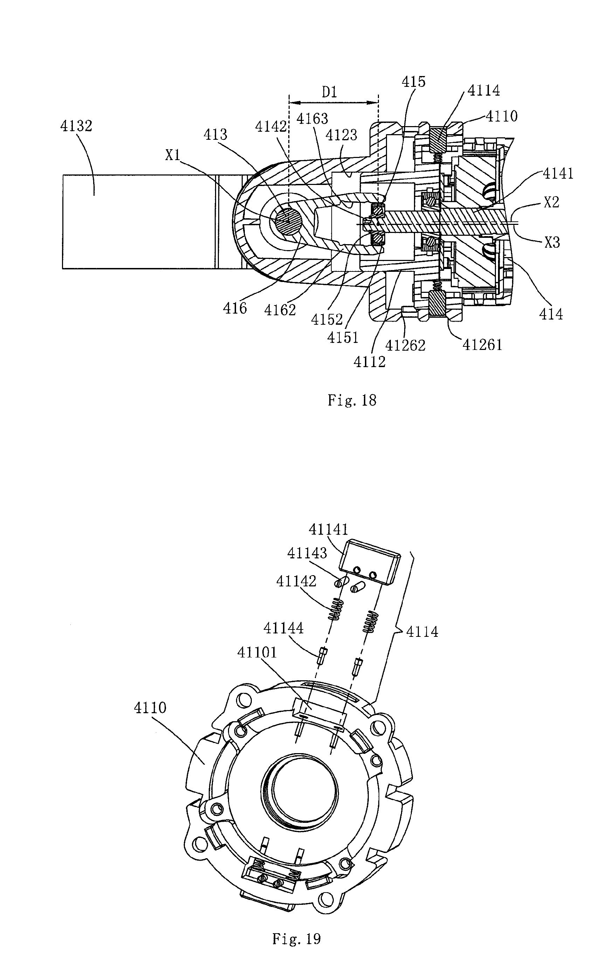

As shown in Figure 17 and Figure 18, the direction of the straight line where the axis X1 of the output shaft 413 exists is defined as the lengthwise direction, while the direction vertical to the axis X1 is defined as the crosswise direction; the bottom of the paper is downward, and the top of the paper is upward. The following descriptions all employ such definitions. The head housing 412 of the oscillating power tool 4100 of the present invention operably moves relative to the body housing 411 to drive the fork 416 to move relative to the eccentric element 415 and coordinate with the fork 416 at different positions, so the output shaft 413 outputs different oscillating angles and drives the working head 4132 to oscillate at different oscillating angles to realize different cutting efficiency.

In this embodiment, a guiding mechanism is disposed between the head housing 412 and the body housing 411 such that the head housing 412 slips relative to the body housing 411. The output shaft 413 is rotationally disposed in the head housing 412. The fork 416 is fixedly arranged on the output shaft 413. When the head housing 412 slips relative to the body housing 411, the fork 416 is driven to move relative to the eccentric element 415, and then the eccentric element 415 and the fork 416 are matched at different positions. Finally, the output shaft 413 outputs different oscillating angles.

Specifically, the guiding mechanism includes a first guiding portion 4123 disposed on the head housing 412 and a second guiding portion 4112 disposed on the body housing 411. The first guiding portion 4123 is bore-shaped. The second guiding portion 4112 is shaped like a ring extending along the axis X2 of the driving shaft 4141. The inner diameter of the first guiding portion 4123 is greater than the outer diameter of the second guiding portion 4112, so the second guiding portion 4112 is able to be just received in the first guiding portion 4123 and relatively slips along the axis X2 of the driving shaft 4141.

In this embodiment, the horizontal portion 4121 and the vertical portion 4122 of the head housing 412 are approximately vertical to each other and approximately cylindrical. The horizontal portion 4121 is sleeved outside the body housing 411, including a sliding sleeve 4124 with a larger diameter and the above first guiding portion 4123 with a smaller diameter. The sliding sleeve 4124 and the first guiding portion 4123 are adjacently arranged along the axis X2 of the driving shaft 4141, and the sliding sleeve 4124 is closer to the eccentric element 415. The body housing 411 is also approximately cylindrical, and the outer diameter of its free end 4110 is smaller than the inner diameter of the sliding sleeve 4124, so the body housing 411 is in a sleeved connection with the head housing 412. The body housing 411 extends from its free end 4110 along the axis X2 of the driving shaft 4141 to form the above guiding portion 4112. The second guiding portion 4112 is cylindrical and just received in the first guiding portion 4123 of the head housing 412 and slips relative to the first guiding portion 4123.

The output shaft 413 is longitudinally arranged, with upper and lower ends respectively fixed in the head housing 412 through bearings 4133 and 4134. The tail end of the output shaft 413 that extends out of the head housing 412 is formed with a flange 4135 with an increasing diameter. The working head 4132 is installed on the flange 4135 through the fixer 4131.

One end of the fork 416 is connected to the top of the output shaft 413, and the other end is coordinated with the eccentric element 415. The fork 416 includes a sleeve tube 4161 sleeved on the output shaft 413 and a fork portion 4162 that horizontally extends from one side of the sleeve tube 4161 to the driving shaft 414. The tail end of the driving shaft 414 extends to form an eccentric shaft 4142. The axis X3 of the eccentric shaft 4142 is parallel to, but not superposed with the axis X2 of the driving shaft 43, and deviates at a certain distance. The eccentric element 415 is a ball bearing having an outer ring 4151 and an inner ring 4152, wherein the outer ring 4151 has a spherical outer surface, and the inner ring 4152 is sleeved on the eccentric shaft 4142. The fork portion 4162 of the fork 416 is approximately U-shaped, having two opposite meshing walls 4163. The two meshing walls 4163 cover the two sides of the outer ring 4151 of the eccentric element 415. The meshing walls and the outer ring closely contact in a slippery way.

After the switch 4111 is on, the driving shaft 4141 of the motor 414 starts to rotate and drives the eccentric element 4142 to eccentrically rotate around the axis X2. The fork portion 4162 of the fork 416 is coordinated with the outer ring 4151 of the eccentric shaft 4142 such that the output shaft 413 is driven to oscillate on its own axis X1.

In order to prevent the head housing 412 and the body housing 411 rotate relative to each other when the head housing 412 slips relative to the body housing 411, namely the head housing 412 rotates relative to the axis X2 of the driving shaft 4141, a limiting mechanism is also arranged between the head housing 412 and the body housing 411. The limiting mechanism includes four guiding rails 4125 and four guiding grooves 4113 that are mutually matched and slip relative to each other. In this embodiment, the guiding rails 4125 are specifically disposed on the inner wall of the sliding sleeve 4124 of the head housing 412 and shaped like strips extending transversely; the four guiding rails 4125 are divided into two groups and respectively located on the upper and lower ends of the sliding sleeve 4124. The guiding grooves 4113 are formed on the outer wall of the free end 4110 of the body housing 411 and close to the second guiding portion 4112. The four guiding grooves 4113 are respectively corresponding to the guiding rails 4125. When the head housing 412 is connected with the body housing 411, the guiding slots 4125 are respectively received in the corresponding guiding grooves 4113 and play the limiting and guiding roles at the same time.

The oscillating power tool 4100 of the present invention also includes a locking mechanism disposed between the head housing 412 and the body housing 411, so the head housing 412 relative to the body housing 411 is fixed at least two mating positions, and the output shaft 413 can output at least two different oscillating angles. In this embodiment, the locking mechanism includes slots 4126 and clips 4114 which are respectively arranged on the head housing 412 and the case 411. Specifically, the two sides of the sliding sleeve 4124 of the head housing 412 are respectively formed with two slots 4126, and the two sides of the free end of 4110 of the case 411 are respectively provided with a clip 4114. The two slots 4126 on the same side are arranged at an interval in the slot direction and are defined as the first slot 41261 and the second slot 41262 in turn. The first slot 41261 is closer to the eccentric element 415. After the head housing 412 and the body housing 411 are connected, the clips 4114 can be respectively matched with the first slot 41261 and the second slot 41262 when the head housing 412 is moved relative to the body housing 411, so the head housing 412 relative to the body housing 411 is relative fixed at two mating positions. Finally, the meshing walls 4163 of the fork 416 are matched with the eccentric element 415 at two different positions, and the output shaft 413 can output two different oscillating angles.

Please refer to Figure 19, in this embodiment, the clips 4114 are elastic units in this embodiment. The two sides of the free end 4110 of the case 411 are respectively formed with a receiving groove 41101, and the two clips 4114 are respectively received in the corresponding receiving grooves 41101. Each clip 4114 specifically includes a square blocking piece 41141, a spring 41142 supporting the blocking piece 41141, a limiting pin 41143 installed on the blocking piece 41141, and a positioning pin 41144 fixing the spring 41142 in the receiving groove 41101. The positioning pin 41143 is clamped in the receiving groove 41101 to prevent the blocking piece 41141 from being radially sprung out by the spring 41142. Radially press the blocking piece 41141, the spring 41142 is compressed, and the blocking piece 41141 is radially pressed into the receiving groove 41101, so the clips 4114 are selectively matched with the first slot 41261 and the second slot 41262.

As shown in Figure 14 and Figure 19, when the oscillating power tool 4100 is in the first status, the head housing 412 and the body housing 411 are coordinated with each other at the first mating position, and the output shaft 413 outputs a first oscillating angle $\alpha 1$. In such circumstances, the clips 4114 on the body housing 411 are clamped in the first slot 41261 of the head housing 412, and the distance from the meshing point between the eccentric element 415 and the fork 416 to the output shaft 413 is D1. The second guiding portion 4112 of the body housing 411 is received in the first guiding portion 4123 on the head housing 412, guiding the head housing 412 to slip relative to the body housing 411.

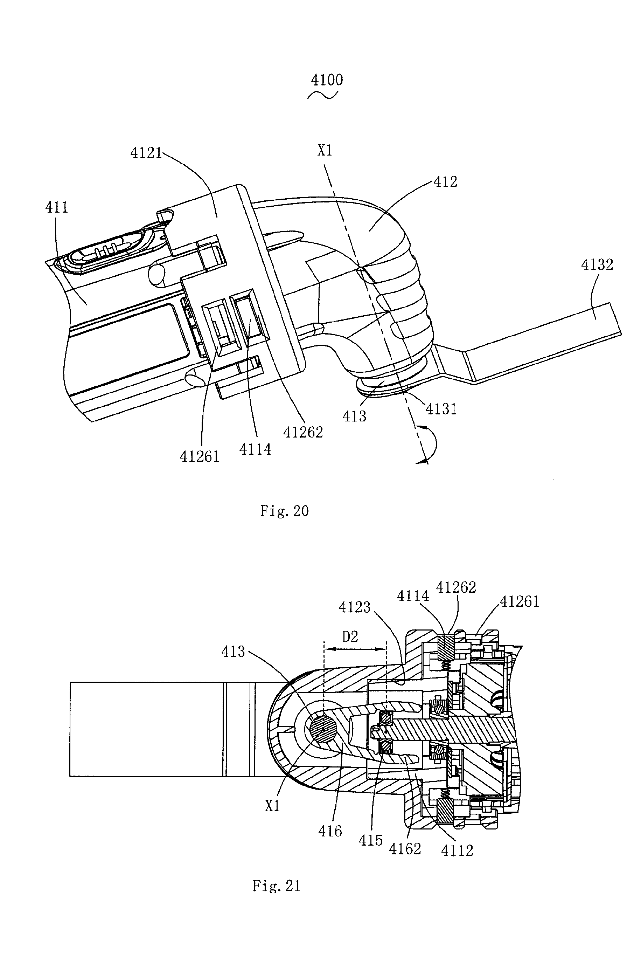

As shown in Figure 20 and Figure 21, after the clips 4114 are radially pressed downward, the head housing 412 is transversely pushed such that the head housing 412 is separated from the body housing 411 at the first mating position and stably slip to the second mating position by the mating between the first guiding portion 4123 and the second guiding portion 4112, and the output shaft 413 outputs the second oscillating angle $\alpha 2$. In such circumstances, the clips 4114 slip to the position of the second slots 41262 and elastically return to the original status and then are clamped in the second slots 41262, so the head housing 412 relative to the body housing 411 is fixed at the second mating position. The fork 416 is driven by the head housing 412 to slip relative to the eccentric element 415 to the second mating position. In such circumstances, the distance from the meshing point between the eccentric element 415 and the fork 416 to the output shaft 413 is reduced to D2. Clearly, the oscillating angle output by the output shaft 413 is increased from $\alpha 1$ to $\alpha 2$ as the distance from the meshing point between the eccentric element 415 and the fork 416 to the output shaft 413 is reduced from D1 to D2.

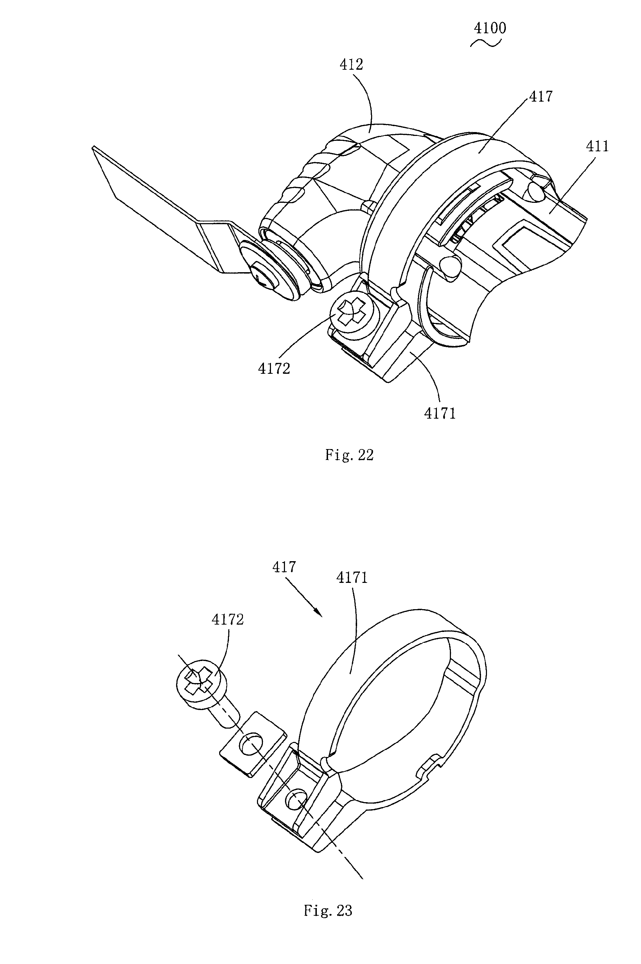

Refer to Figure 22 and Figure 23 together. In order to ensure that the head housing 412 and the body housing 411 can be relatively steadily matched in any position and avoid shaking when vibrating during working, the oscillating power tool 4100 of the present invention also includes a binding mechanism 417. The binding mechanism 417 is sleeved on the head housing 412 to ensure that the head housing 412 and the body housing 411 are steadily matched at any position and prevent loosening. The binding mechanism 417 specifically includes an annular collar 4171 located on the periphery of the sliding sleeve 4124 of the head housing 412, and a locking element 4172 connected to the tail end of the collar 4171. If unfasten the locking element 4172 when in usage, the head housing 412 can move relative to the body housing 411 between two mating positions. Fasten the locking element 4172 after the head housing 412 and the body housing 411 are fixed at any mating position, the head housing 412 and the body housing 411 can be more closely integrated to prevent the head housing 412 from loosening during working.

It should be pointed out that, in this embodiment, the head housing and the case are matched and fixed through the clips and the slots. The structures of the clips and the slots are not limited to this embodiment. The clips and the slots are matched to play the limiting and fixing roles, so the clips can be disposed on the case while the slots are formed on the head housing; the clips can also be elastic steel balls, and the slots are corresponding ball-shaped recesses.

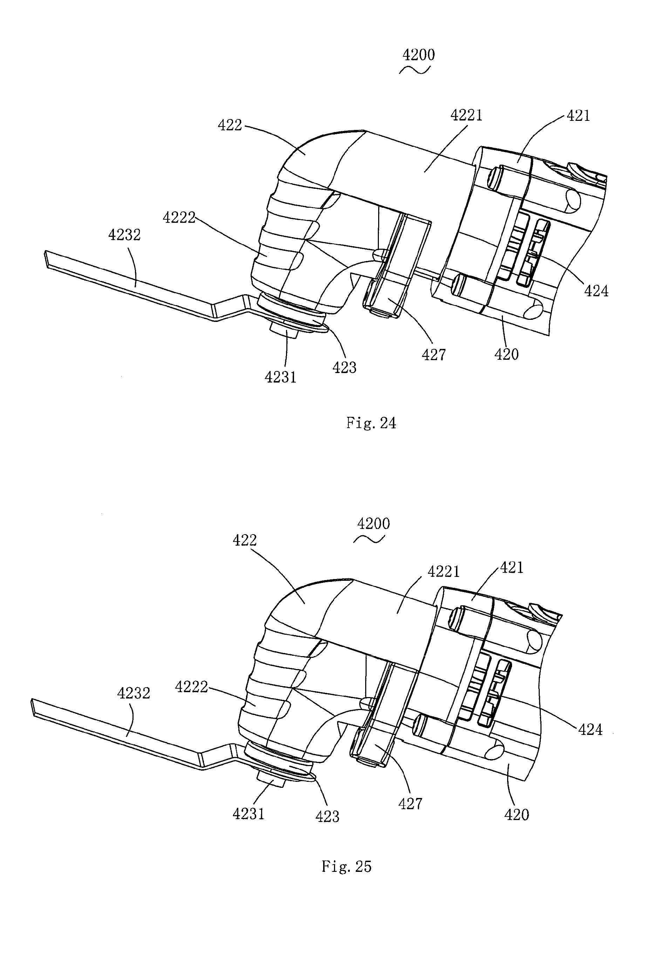

In this embodiment, the head housing 412 and the body housing 411 realize relative movement by the guiding mechanism and are respectively matched with the first slots 41261 and the second slots 41262 through the clips 4114 and fixed at two positions, so the fork 416 and the eccentric element 415 are matched at two positions, and finally the output shaft 413 outputs two different oscillating angles. Clearly, the oscillating power tool of the present invention is not limited to the situation that the head housing and the case are fixed at two mating positions, but can be fixed at any position in an allowed movement scope, so the output shaft can selectively output more different oscillating angles. The fourth embodiment of the present invention is briefly described with reference to Figures 24-30.

Embodiment 4

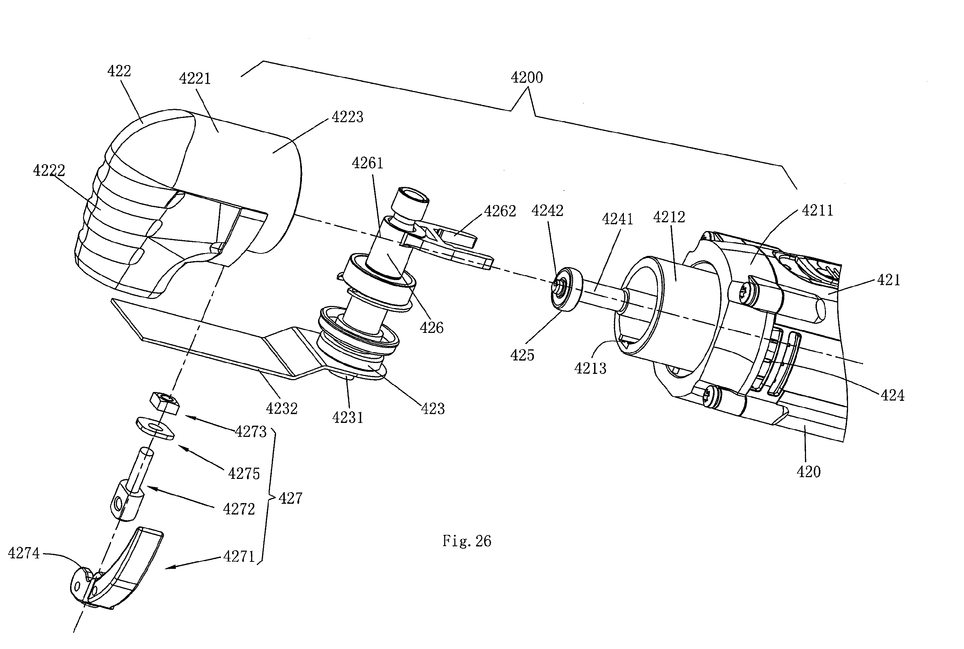

As shown in Figure 24 and Figure 26, the structure of oscillating power tool 4200 in the fourth embodiment of the present is similar to that of the oscillating power tool 4100 in the third embodiment The oscillating power tool 4200 includes a housing 420. The housing 420 are specifically divided into a body housing 421 and a head housing 422 which are connected with each other. The head housing 422 receives an output shaft 423 inside, and the body housing 421 receives a motor 424 inside. The motor 424 has a driving shaft 4241 which is approximately vertical to the output shaft 423. When rotating, the driving shaft 4241 drives the output shaft to oscillate. The tail end of the output shaft 423 extends out of the head housing 422 and is equipped with a working head 4232 through a fixture 4231. Driven by the output shaft 423, the working head 4232 oscillates to conduct the cutting function.

The head housing 422 includes a horizontal portion 4221 and a vertical portion 4222 which are approximately vertical to each other and the horizontal portion 4221 and the vertical portion 4222 are approximately cylindrical. The body housing 421 is transversely disposed, including a cylindrical free end 4211. A guiding mechanism is also installed between the head housing 422 and the body housing 421, and specifically includes a first guiding portion 4223 disposed on the head housing 422 and a second guiding portion 4212 disposed on the body housing 421. The first guiding portion 4223 is formed by further transversely extending from the horizontal portion 4221 of the head housing 422, and the second guiding portion 4212 is formed by transversely extending inside from the free end 4211 of the body housing 421. The first guiding portion 4223 is sleeved outside the second guiding portion 4212 and slip relative to the second guiding portion.

The tail end of the driving shaft 4241 extends to form an eccentric shaft 4242. The eccentric shaft 4242 is equipped with an eccentric element 425. The output shaft 423 is equipped with a fork 426 matched with the eccentric element 425. Through mating between the fork 426 and the eccentric element 425, the rotary motion of the driving shaft 4241 is converted into the oscillatory motion of the output shaft 423. The fork 426 includes a sleeve tube 4261 connected to the output shaft 423 and a fork portion 4262 horizontally extending from one side of the sleeve tube 4261 to the driving shaft 4241. The fork portion 4262 covers two sides of the eccentric element 425. The output shaft 423 is fixedly arranged in the head housing 422. The fork 426 is fixedly arranged on the output shaft 423. When slipping relative to the body housing 421, the head housing 422 drives the fork 426 to move relative to the eccentric element 425, and the eccentric element 425 and the fork portion 4262 of the fork 426 are matched at different position. Finally, the output shaft 423 outputs different oscillating angles.

Different from the third embodiment in that, the oscillating power tool 4200 includes a locking mechanism 427 that fixes the head housing 422 relative to the body housing 421 at any position in an area where the head housing 422 is allowed to slip relative to the body housing 421, so the output shaft 423 is able to output several different oscillating angles. The locking mechanism 427 is provided with a cam lever 4271. Rotate the cam lever 4271 to separate or lock the head housing 422 and the body housing 421, so the head housing 422 can be moved or fixed relative to the body housing 421.

Specifically, the locking mechanism 427 includes a connecting rod 4272 and a fixing element 4273 installed at the top of the connecting rod 4272. The connecting rod 4272 longitudinally penetrates through the first guiding portion 4222 and the second guiding portion 4212. The cam lever 4271 is pivotally connected to the tail end of the connecting rod 4272. The inner wall of the bottom end of the second guiding portion 4212 is formed with a recess 4213, and the locking element 4273 is received in the recess 4213. When the head housing 422 slips relative to the body housing 421, the connecting rod 4272 is able to transversely slip in the recess 4213.

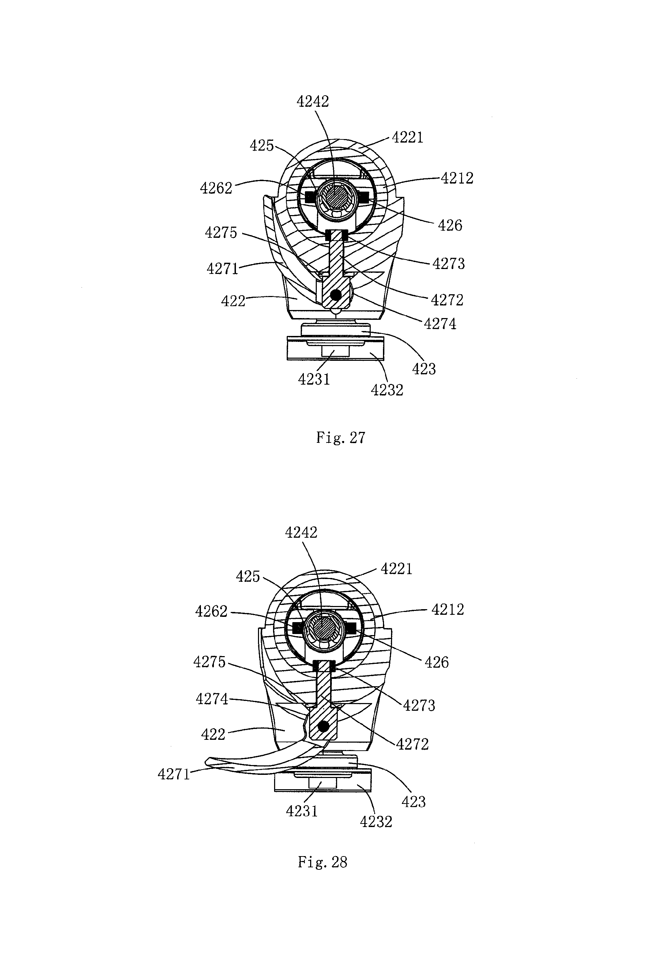

As shown in Figure 26 and Figure 28, the cam lever 4271 has a cam surface 4274, and the connecting rod 4272 is sleeved with a spacer 4275. When the cam lever 4271 pivots, the cam surface 4274 is pressed against the spacer 4275, and the high and low points of the cam surface 4274 are respectively meshed with the spacer 4275, so the first guiding portion 4223 and the second guiding portion 4212 are loosened or locked. As shown in Figure 26, the cam lever 4271 is located at the closing position; the head housing 422 and the body housing 421 are locked and fixed by the locking mechanism 417; the head housing 422 and the body housing 421 cannot slip relative to each other. As shown in Figure 27, the cam lever 4271 is located at the open positing, opposite to the closing position. The cam lever pivotally moves approximately 90 degrees in the anticlockwise direction. At the open position, the head housing 422 and the body housing 421 are loosened by the locking mechanism 417. In such circumstances, the head housing 422 and the body housing 421 can slip relative to each other.

To adjust the oscillating angle of the output shaft 423, rotate the cam lever 4271 to the open position first, then move the head housing 422 relative to the body housing 421 to a predetermined position, next rotate the cam lever 4271 to the closing position and fix the head housing 422 relative to the body housing 421, so the oscillating power tool 4200 works at the regulated oscillating angle.

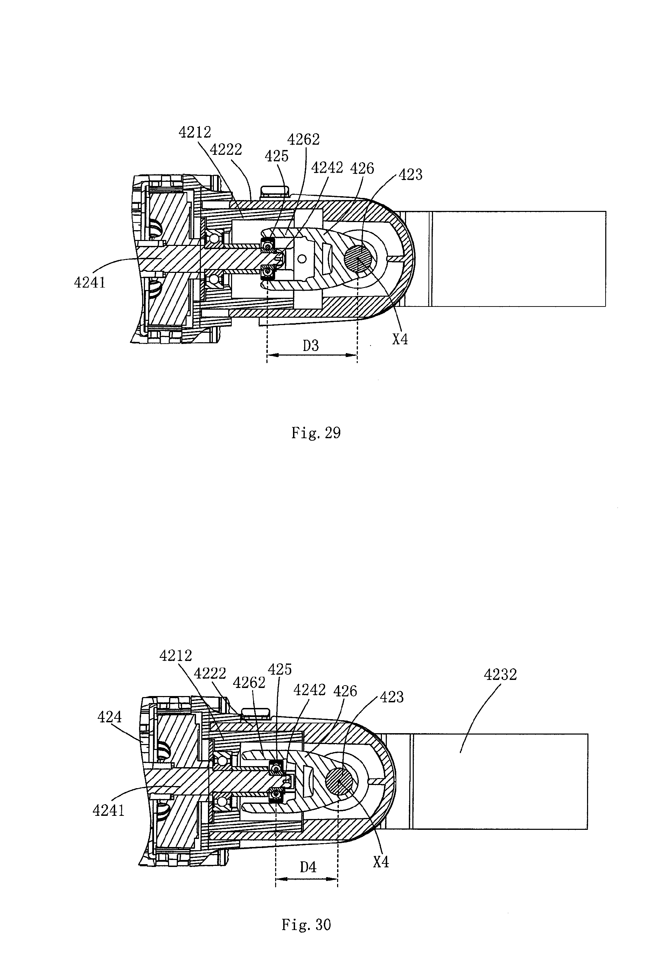

As shown in Figure 24 and Figure 29, the head housing 422 and the body housing 421 are located at the first mating position; the distance from the meshing point between the eccentric element 425 and the fork 426 to the output shaft 423 is D3; and the oscillating angle output by the output shaft 423 is α3. As shown in Figure 27 and Figure 30, the head housing 422 and the body housing 421 are located at the second mating position; the distance from the meshing point between the eccentric element 425 and the fork 426 to the output shaft 423 is D4; and the oscillating angle output by the output shaft 423 is α4. When the first guiding portion 4223 and the second guiding portion 4212 are matched, the head housing 422 slips relative to the body housing 421 from the first mating position to the second mating position. D3 is greater than D4, so the oscillating angle α3 of the output shaft 423 is smaller than α4. The output shaft 423 can drive the working head 4232 to work at different oscillating angles to realize different cutting efficiencies.

In addition, the oscillating power tool 4300 in this embodiment also has a visible scale (not shown in the Figure) disposed on the head housing 422. The scale can indicate the corresponding oscillating angle of the output shaft 423 after the head housing 422 slips relative to the body housing 421. Through the scale, the required oscillating angle can be adjusted conveniently and accurately. Clearly, the scale can also be disposed on the body housing 421.

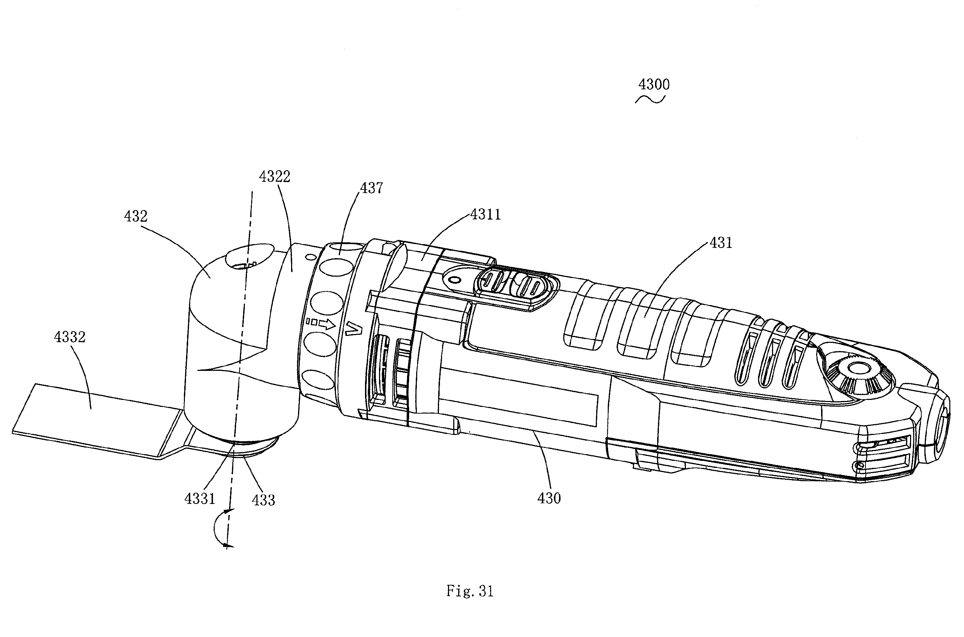

In both the third and fourth embodiments, the head housing is manually moved to a predetermined position and then fixed relative to the body housing through the locking mechanism, so that the output shaft can output variable oscillating angles. The fifth embodiment of the present invention discloses another oscillating power tool, which further realizes the movement and fixation of the head housing, simplifies the operation steps and makes the operation easier and quicker. The fifth embodiment of the present invention is described in detail below with reference to Figures 31-36.

Embodiment 5

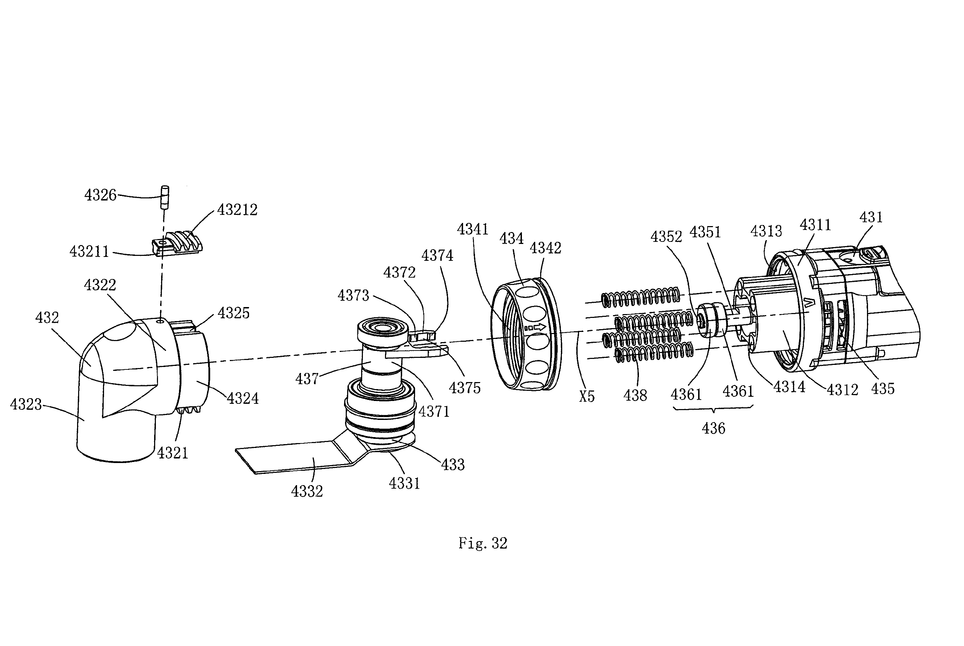

As shown in Figure 31 and Figure 32, the housing 430 of the oscillating power tool 4300 in this embodiment includes a body housing 431 and a head housing 432. The tail end of the output shaft 433 extends out of the head housing 432 and is equipped with a working head 4331 through a fixture 4332. Driven by the output shaft 433, the working head 4332 oscillates to conduct the cutting function. The head housing 432 is un-rotationally arranged relative to the case 431 and is provided with operating elements 4321. The periphery of the head housing 432 is sleeved with an adjusting cover 434 which can rotate relative to the operating elements 4321. The adjusting cover 434 and the operating elements 4321 are spirally matched. By rotating the adjusting cover 434, the head housing 432 can be driven to move relative to the body housing 431 through mating with the operating elements 4321, and then the output shaft 433 can output different oscillating angles.

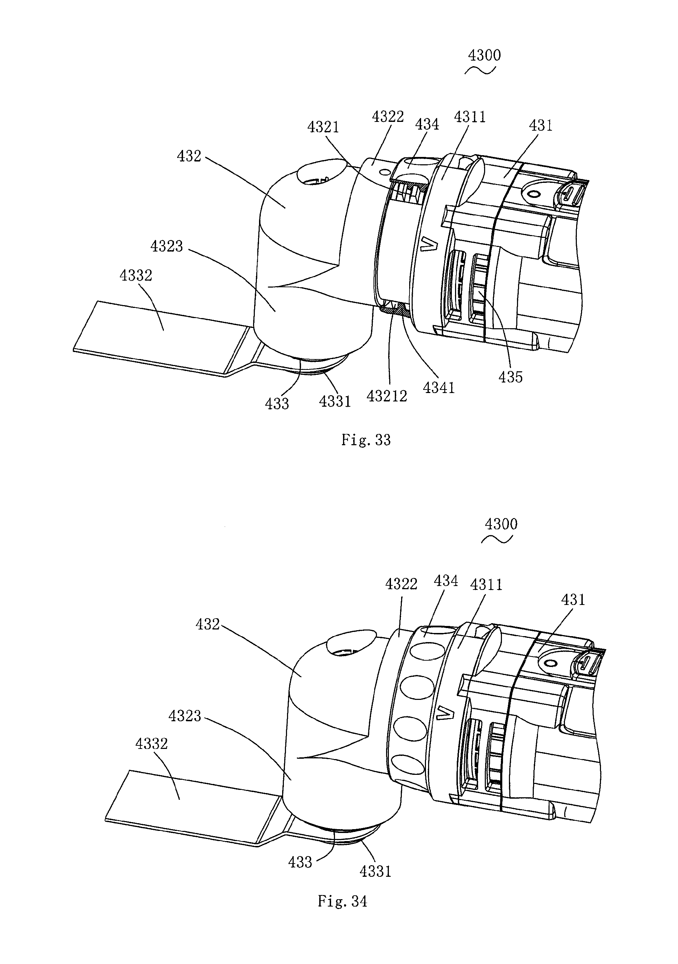

As shown in Figure 32 and Figure 33, the head housing 432 includes a horizontal portion 4322 and a vertical portion 4323 which are approximately vertical to each other. The body housing 431 has a free end 4311 connected to the horizontal portion 4322 of the head housing 432. A guiding mechanism is also arranged between the head housing 432 and the body housing 431 and specifically includes a first guiding portion 4324 that extends out from the horizontal portion 4322 of the head housing 432 and a second guiding portion 4312 that extends out of the free end of 4311 of the body housing 431. The first guiding portion 4324 is sleeved on the periphery of the second guiding portion 4312 and can slip relative to the second guiding portion.

The body housing 431 is internally equipped with a motor 435. The motor 435 has a driving shaft 4351 that extends transversely. The tail end of the driving shaft 4351 is connected to an eccentric shaft 4352. The eccentric shaft 4352 is equipped with an eccentric element 436. In this embodiment, the eccentric element 436 specifically includes a first bearing 4361 and a second bearing 4362 arranged in parallel. The output shaft 433 is equipped with a fork 437. The fork 437 includes a sleeve tube 4371 sleeved on the output shaft 433 and a fork portion 4372 that transversely extends from the sleeve tube 4371. The fork portion 4372 has a first meshing section 4373 and a second meshing section 4374 which are respectively matched with the first bearing 4361 and the second bearing 4362, and a recess portion 4375 located between the first meshing section 4373 and the second meshing section 4374.

The first guiding portion 4324 of the head housing 432 is cylindrical, having inward recessed receiving portions 4325 on the top and at the bottom. Two operating elements 4321 are provided, respectively fixed in the corresponding receiving portions 4325 through pins 4326. Each operating element 4321 is block-like, specifically including a rectangular base portion 43211 and an outer spiral portion 43212 extending from the base portion 43211. The adjusting cover 434 is ring-shaped, sleeved on the periphery of the first guiding portion 4324. Its inner wall is formed with inner spiral portions 4341 meshed with the outer spiral portions 43212 of the operating elements 4321. One end of the adjusting cover 434 close to the body housing 431 is concavely provided with an annular clipping ring 4342. The inner wall of the free end 4311 of the body housing 431 is protruded to form an annular clip 4313. The adjusting cover 434 is matched with the clip 4313 through the clipping ring 4342 and connected to the body housing 431, can rotate around the axis X5 of the driving shaft 4351, but cannot move in the transverse direction.

To ensure that the head housing 432 and the body housing 431 are always closely connected, elastic units 438 are disposed between the head housing 432 and the body housing 431. The elastic units 438 are compressed and always have the trend to enable the head housing 432 to move towards the direction away from the body housing 431. Specifically, the end of the second guiding portion 4312 of the body housing 431 is formed with four receiving holes 4314, and four elastic units 438 are provided. One end of each elastic unit 438 is received in the corresponding receiving hole 4314 and the other end is pressed against the inner wall of the head housing 432.

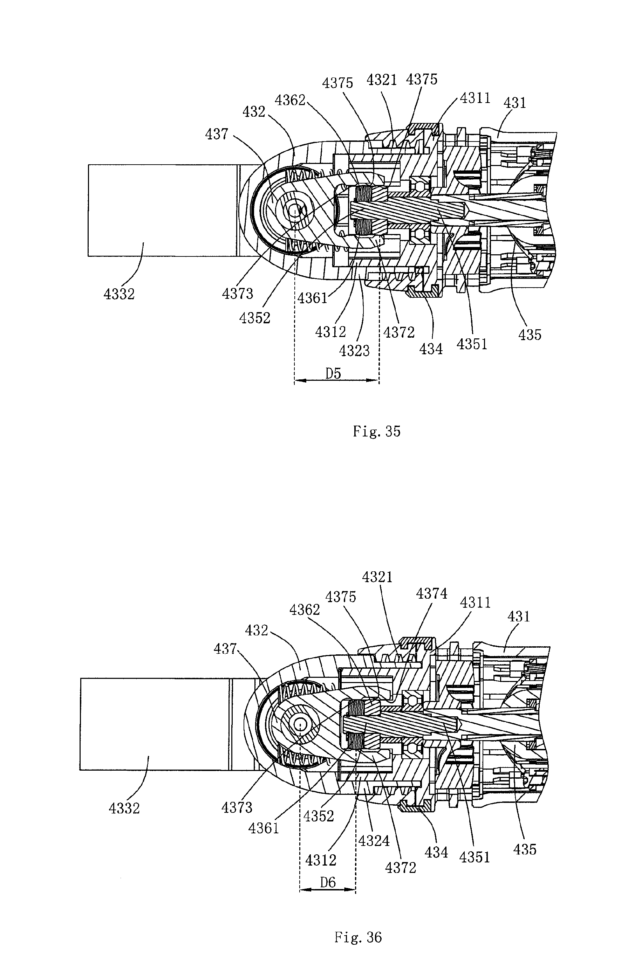

Refer to Figures 31, 34 and 36. The head housing 432 and the body housing 431 of the oscillating power tool 4300 in this embodiment have two mating positions. The output shaft 433 can output different oscillating angles in different mating positions. As shown in Figure 31 and Figure 35, the head housing 432 and the body housing 431 are located at the first mating position; the first bearing 4361 is corresponding to the recess portion 4375 of the fork 437; the second bearing 4362 is meshed with the second meshing portion 4374 of the fork 437; the distance from the meshing point to the output shaft 433 is D5; and the oscillating angle output by the output shaft 433 is $\alpha 5$. As shown in Figure 21 and Figure 23, the head housing 432 and the body housing 431 are located at the second mating position; the second bearing 4362 is separated from the second meshing section 4374 of the fork 437 and is corresponding to the recess portion 4375 of the fork 437; the first bearing 4361 is meshed with the first meshing portion 4373 of the fork 437; the distance from the meshing point to the output shaft 433 is D6; and the oscillating angle output by the output shaft 433 is $\alpha 6$. D5 is greater than D6, so the oscillating angle $\alpha 5$ of the output shaft 423 is smaller than $\alpha 6$. The output shaft 433 can drive the working head 4332 to work at different oscillating angles to realize different cutting efficiencies.

To adjust the oscillating angle of the output shaft 433, the adjusting cover 434 is rotated to adjust the spiral fit between the adjusting cover 434 and the operating elements 4321 of the head cover 432 and the guiding fit between the first guiding portion 4324 and the second guiding portion 4312 to drive the head housing 432 to stably move relative to the body housing 431 along the axis X5 of the driving shaft 4351, so that the head housing 432 and the body housing 431 switch between the first mating position and the second mating position, and the output shaft 433 outputs different oscillating angles $\alpha 5$, $\alpha 6$.

It should be pointed out that, in this embodiment, the head housing switches relative to the case between the two mating positions such as the output shaft outputs the oscillating angle in a step way. The present invention is not limited to the above embodiments. Clearly, if only one eccentric element is arranged and the fork portion of the fork is in sliding fit with the eccentric element, and the movement distance of the head housing relative to the case can be adjusted in a step-less way, and the output shaft outputs the oscillating angles in a step-less way.

In conclusion, the oscillating power of the present invention allows the fork and the eccentric element to operably move relative to each other and to be matched at least two positions, so the output shaft outputs at least two different oscillating angles; through a fixing mechanism which is further arranged to fix the fork and the eccentric element at any mating position, the output shaft can work at any randomly selected oscillating angle. In the third, fourth and fifth embodiments, the output shaft is fixed in the head housing, and the fork is fixedly connected to the output shaft. The fork moves relative to the eccentric element through moving the head housing.

The present invention is not limited to the above embodiments. Those skilled in this field can easily understand that: The head housing is fixedly arranged relative to the case; the adjusting mechanism for moving the fork or eccentric element is arranged instead of moving the head housing; the fixing mechanism has a locking state and a release state; in the locking status, the adjusting mechanism is fixed; in the release state, the adjusting mechanism can be moved; and thus, the output shaft outputs different oscillating angles, and can stably work at any randomly selected oscillating angle.

**Claims**

1. An oscillating power tool, comprising:

    a housing having a head housing and a body housing connected to the head housing,
    a motor contained in the body housing and having a rotatable driving shaft,
    an eccentric unit disposed on the driving shaft and being eccentrically rotatable about an axis of the driving shaft,
    an output shaft contained in the head housing and being capable of oscillating about an axis of the output shaft for installing and driving a working head, and
    a fork connected to the output shaft and being configured to transform the rotating motion of the driving shaft to the oscillating motion of the output shaft by cooperation with the eccentric unit,
    **wherein** the head housing is operable to move relative to the body housing and
    to drive the fork moving relative to the eccentric unit and coordinating with the eccentric unit in different positions, thus the output shaft oscillate at different oscillating angles.

2. The oscillating power tool according to claim 1, **wherein** a guiding mechanism is disposed between the head housing and the body housing to slide the head housing relative to the body housing.

3. The oscillating power tool according to claim 2, **wherein** one of the head housing and the body housing comprises at least one clip and the other of the head housing and the body housing comprises at least two slots for coordinating with the clip respectively to fix the head housing and the body housing in at least two coordinating positions.

4. The oscillating power tool according to claim 3, **wherein** a binding mechanism is disposed at the outside of the head housing or that of the body housing, the binding mechanism is configured to prevent the looseness of the head housing and the body housing in the coordinating positions.

5. The oscillating power tool according to claim 2, **wherein** a locking mechanism is disposed between the head housing and the body housing, the locking mechanism is configured to lock the head housing and the body housing at any one of the sliding position of the head housing and the body housing.

6. The oscillating power tool according to claim 5, **wherein** the locking mechanism comprises a cam lever which is rotatable to loose or lock the head housing and the body housing.

7. The oscillating power tool according to claim 5, **wherein** an visible scale is disposed on one of the head housing and the body housing and configured to illustrate the oscillating angle of the output shaft when the head housing slides relative to the body housing.

8. The oscillating power tool according to claim 2, **wherein** a limiting mechanism is disposed between the head housing and the body housing and configured to limit the rotation of the head housing relative to the body housing.

9. The oscillating power tool according to claim 8, **wherein** the limiting mechanism comprises a guiding groove being disposed on one of the head housing and the body housing and a guiding rail disposed on the other one of the head housing and the body housing, the guiding rail is slidable in the guiding groove without rotation.

10. The oscillating power tool according to claim 1, **wherein** the head housing is not rotatable relative to the body housing, the oscillating power tool comprises an adjusting cover being rotatable about the axis of the output shaft, an operating element being disposed on the head housing and being spirally meshed with the adjusting cover, the adjusting cover is rotatable to move about the axis of the output shaft relative to the body housing by coordinating with the operating element.

11. An oscillating power tool comprises:

a housing having a head housing and a body housing connected to the head housing, a motor contained in the body housing and having a rotatable driving shaft, an eccentric unit disposed on the driving shaft and being eccentrically rotatable about an axis of the driving shaft, an output shaft contained in the head housing and being capable of oscillating about an axis of the output shaft for installing and driving a working head, and a fork connected to the output shaft and being configured to transform the rotating motion of the driving shaft to the oscillating motion of the output shaft by cooperation with the eccentric unit, **wherein** the fork is operable to move relative to the eccentric unit and coordinate with the eccentric unit in at least two different coordinating positions, thus the output shaft oscillates at different oscillating angles, the oscillating power tool further comprising a fixing mechanism for fixing the fork and the eccentric unit in any one of the coordinating positions.

12. The oscillating power tool according to claim 11, **wherein** the fixing mechanism comprises a clip and a slot coordinated with the clip.

13. The oscillating power tool according to claim 12, **wherein** the output shaft is fixedly disposed in the head housing, the head housing is operable to move relative to the body housing, the clip is disposed on one of the head housing and the body housing, and the other one of the head housing and the body housing comprises at least two slots respectively coordinate with the clip.

14. The oscillating power tool according to claim 13, **wherein** a binding mechanism is disposed at the outside of the head housing or that of the body housing, the binding mechanism is configured to prevent the looseness of the head housing and the body housing in the coordinating positions.

15. The oscillating power tool according to claim 11, **wherein** the locking mechanism comprises a cam lever, the cam lever is rotatable to move or fix the fork and the eccentric unit.

16. The oscillating power tool according to claim 15, **wherein** the output shaft is fixedly disposed in the head housing which is operable to move relative to the body housing, the cam lever is rotated to fix the head housing relative to the body housing when the head housing slides to any position relative to the body housing.

17. The oscillating power tool according to claim 11, **wherein** the head housing is not rotatable relative to the body housing, the fixing mechanism comprises an adjusting cover and an operating element which is spirally meshed with the adjusting cover, the adjusting cover is rotated to fix the fork and the eccentric unit by coordinating of the eccentric unit with the fork in different positions through the operating element.

18. The oscillating power tool according to claim 17, **wherein** the output shaft is fixedly disposed in the head housing which is operable to move relative to the body housing, the operating element is disposed on the head housing or the body housing.

19. The oscillating power tool according to claim 18, **wherein** an elastic unit is disposed between the head housing and the body housing and is configured to bias the head housing towards a direction far away from the body housing.

20. The oscillating power tool according to claim 11, **wherein** the oscillating power tool comprises an adjusting mechanism for adjusting the fork to move relative to the eccentric unit, the fixing mechanism has a locking condition which the adjusting mechanism is fixed and a releasing condition which the adjusting mechanism is removable.

100'

X

8'

7'

11'

1'

2'

6'

4'    41'

Fig. 1

Fig. 2

Fig. 3

Fig. 4

EP 2 823 938 A1

181    182

185

184

Fig. 5

14    142

143    146

147

145    141

144

Fig. 6

21

145  14  141  15

182

13

181

153

Fig. 7

13  14

141

C1  B

X4

X3

X2

A

18

Fig. 8

Fig. 9

Fig. 10

Fig. 11

Fig. 12

Fig. 13

Fig. 14

Fig. 15

Fig. 16

Fig. 17

EP 2 823 938 A1

Fig. 18

Fig. 19

4100

Fig. 20

Fig. 21

4100

412

417

411

4172

4171

Fig. 22

417 4171

4172

Fig. 23

4200

422        4221        421

4222

4232

4231        423        427        420

424

Fig. 24

4200

422        4221        421

4232        4222

4231        423        427        420

424

Fig. 25

Fig. 26

Fig. 27

Fig. 28

Fig. 29

Fig. 30

Fig. 31

Fig.32

Fig. 33

Fig. 34

Fig. 35

Fig. 36

# INTERNATIONAL SEARCH REPORT

| International application No. |
|---|
| **PCT/CN2013/000253** |

## A. CLASSIFICATION OF SUBJECT MATTER

B25F 5/00 (2006.01) i

According to International Patent Classification (IPC) or to both national classification and IPC

## B. FIELDS SEARCHED

Minimum documentation searched (classification system followed by classification symbols)

Documentation searched other than minimum documentation to the extent that such documents are included in the fields searched

IPC：B25F

Electronic data base consulted during the international search (name of data base and, where practicable, search terms used)

CNABS, CNKI, VEN :oscillat+, reciprocat+, angle, scope, range, adjust+, chang+, eccentric, case, shell

## C. DOCUMENTS CONSIDERED TO BE RELEVANT

| Category* | Citation of document, with indication, where appropriate, of the relevant passages | Relevant to claim No. |
|---|---|---|
| PY | CN 102441874 A (POSITEC POWER TOOLS SUZHOU CO LTD) 09.May 2012(09.05.2012) see description, paragraphs [0061]-[0084] and figures 1-16 | 1-20 |
| Y | CN 1623739 A (BOSCH GMBH ROBERT) 08.June 2005 (08.06.2005) see description, page 6, line 3 to page 8, line 4 and figures 1-3 | 1-20 |
| Y | CN 101959632 A (BOSCH GMBH ROBERT) 26.Janurary 2011 (26.01.2011) see description, paragraphs [0030]-[0037] and figure 1 | 1-10 |
| Y | US 5441450 A (FEIN GMBH & CO C & E) 15.August 1995(15.08.1995) see description, column 4, line 55 to column 7, line 16 and figures 1, 2 | 11-20 |
| A | CN 102294641 A (ZHEJIANG CROWN ELECTRIC TOOL MFG CO LTD) 28 December 2011 (28.12.2011) see the whole document | 1-20 |

☐ Further documents are listed in the continuation of Box C.      ☒ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
|---|---|
| | **27.June 2013 (27.06.2013)** |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>                   TIAN, Lili<br><br>Telephone No. (86-10) **62085443** |

Form PCT/ISA /210 (second sheet) (July 2009)

## INTERNATIONAL SEARCH REPORT
### Information on patent family members

| International application No. |
|---|
| **PCT/CN2013/000253** |

| Patent Documents referred in the Report | Publication Date | Patent Family | Publication Date |
|---|---|---|---|
| CN 102441874 A | 09.05.2012 | WO 2012041211 A1 | 05.04.2012 |
| | | CN 102441873 A | 09.05.2012 |
| | | CN 102441875 A | 09.05.2012 |
| CN 1623739 A | 08.06.2005 | GB 2408708 A | 08.06.2005 |
| | | US 2005126803 A1 | 16.06.2005 |
| | | DE 10356068 A1 | 23.06.2005 |
| | | GB 2408708 B | 16.11.2005 |
| | | US 7108077 B2 | 19.09.2006 |
| | | CN 100575004 C | 30.12.2009 |
| CN 101959632 A | 26.01.2011 | WO 2009106178 A1 | 03.09.2009 |
| | | DE 102008000470 A1 | 03.09.2009 |
| | | EP 2262601 A1 | 22.12.2010 |
| | | US 2011000692 A1 | 06.01.2011 |
| US 5441450 A | 15.08.1995 | EP 0623422 A1 | 09.11.1994 |
| | | DE 4314799 A1 | 10.11.1994 |
| | | DE 4314799 C2 | 13.04.1995 |
| | | EP 0623422 B1 | 10.07.1996 |
| | | DE 59400405 G | 14.08.1996 |
| CN 102294641 A | 28.12.2011 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 100575004 C